# EUROPÄISCHE PATENTSCHRIFT

(11) **EP 3 083 522 B1**
(45) Veröffentlichungstag und Bekanntmachung des Hinweises auf die Patenterteilung: **28.03.2018**
(21) Anmeldenummer: 14827416.0
(22) Anmeldetag: 22.12.2014
(51) Int. Cl.: C04B 28/12, C04B 40/06, E04B 1/74

(54) **BAUSTOFFTROCKENMISCHUNG UND DARAUS ERHÄLTLICHER WÄRMEDÄMMPUTZ**
DRY BUILDING MATERIAL MIXTURE AND THERMAL INSULATION PLASTER PRODUCED THEREFROM
MÉLANGE SEC DE MATÉRIAU DE CONSTRUCTION ET ENDUIT D'ISOLATION THERMIQUE OBTENU À PARTIR DE CE MÉLANGE

(30) Priorität: 20.12.2013 DE 102013021702; 29.01.2014 DE 102014101055; 12.02.2014 DE 102014101704
(43) Veröffentlichungstag der Anmeldung: 26.10.2016
(73) Patentinhaber: Interbran Systems AG, 76131 Karlsruhe (DE)
(72) Erfinder: BÜTTNER, Siegmar, 68519 Viernheim (DE); SCHÜMCHEN, Kurt, 53949 Dahlem (DE)
(74) Vertreter: Von Rohr Patentanwälte Partnerschaft mbB
(86) Internationale Anmeldenummer: PCT/EP2014/003460
(87) Internationale Veröffentlichungsnummer: WO 2015/090615

(56) Entgegenhaltungen:
- EP-A1- 2 799 409
- EP-A2- 2 597 072
- EP-A2- 2 722 319
- WO-A1-2010/126792
- WO-A1-2012/065906
- US-B1- 6 217 646

## Beschreibung

Die vorliegende Erfindung betrifft das technische Gebiet der Wärmedämmung, insbesondere der Wärmedämmung von Gebäuden.

Insbesondere betrifft die vorliegende Erfindung eine Baustofftrockenmischung, insbesondere einen Putzmörtel, sowie dessen Verwendung zur Herstellung eines Dämmputzes.

Weiterhin betrifft die vorliegende Erfindung einen Dämmputz sowie ein Dämmputzsystem, welches den Dämmputz enthält.

Darüber hinaus betrifft die vorliegende Erfindung ein Wärmedämmverbundsystem (WDVS), welches eine Wärmedämmplatte sowie ein Dämmputzsystem aufweist.

Schließlich betrifft die vorliegende Erfindung eine Dämmputzplatte, welche sich insbesondere zur Innendämmung eignet.

Während die Wärmedämmung von Gebäuden bis in die 80er Jahre des 20. Jahrhunderts bei Neubau und Erwerb von Immobilien als nachrangig angesehen wurde, rückt sie aufgrund steigender Energiepreise, eines geschärften Umweltbewusstseins und nicht zuletzt aufgrund gesetzgeberischer Maßnahmen, wie beispielsweise der Energieeinsparverordnung (EnEV), zunehmend in den Fokus.

Die Dämmung von Neu- und Altbauten erfolgt dabei überwiegend durch eine sogenannte Außendämmung, d. h. die Außenseiten der Gebäude werden mit Dämmstoffen ausgerüstet.

Üblicherweise werden für die Wärmedämmung bevorzugt Wärmedämmverbundsysteme (WDVS) eingesetzt, welche aus einem plattenförmigen Dämmmaterial, einer außenseitig darauf angebrachten Armierungsschicht, bestehend aus einem Armierungsmörtel sowie einem Armierungsgewebe und einem Oberputz, aufgebaut sind. Die Dämmplatten sind üblicherweise auf Basis von Kunststoffen, insbesondere Polystyrol-Hartschäumen (PS), wie beispielsweise Polystyrol-Partikelschaum (EPS), Polystyrol-Extruderschaum (XPS), oder auf Basis von Polyurethan-Hartschäumen (PUR) ausgebildet. Wärmeverbundsysteme auf Grundlage der vorgenannten Kunststoffdämmplatten besitzen unter Idealbedingungen hervorragende Dämmeigenschaften, haben jedoch den Nachteil, dass sie eine Dampfsperre bilden und Feuchtigkeit aus dem Mauerwerk nicht an die Umgebung abgegeben werden kann, was oftmals zur Bildung von Schimmel und Algen führt. Darüber hinaus steigert die Feuchtigkeit die Wärmeleitfähigkeit des Systems, weshalb die theoretischen Wärmedurchgangskoeffizienten (U-Werte) gemäß EN ISO 6946 in der Praxis oftmals nicht erreicht werden.

Darüber hinaus besitzen derartige Wärmedämmverbundsysteme (WDVS) Dicken von 15 bis 20 cm, um eine ausreichende Wärmedämmung zu erreichen, was oftmals zu einer optischen Verschlechterung der gedämmten Fassade und einem reduzierten Lichteinfall ins Innere des Gebäudes durch die Fenster führt. Zur Reduzierung der Dicke der Wärmeverbundsysteme (WDVS) werden in jüngster Zeit zunehmend Vakuumdämmplatten, sogenannte Vakuum-Isolationspaneele (VIP), eingesetzt, welche eine effektive Wärmedämmung mit Wärmedämmverbundsystemen einer Dicke von ca. 10 cm erlauben. Aber auch diese Wärmedämmverbundsysteme weisen den entscheidenden Nachteil, dass sie nicht diffusionsoffen sind, d. h. Feuchtigkeit aus dem Mauerwerk nicht an die Umgebung abgegeben werden kann.

Den alternativ eingesetzten diffusionsoffenen Dämmstoffen, beispielsweise auf Basis von Mineralwolle oder natürlichen organischen Fasern, wie Holz-, Kork-, Hanf- und Schilffasern, fehlt hingegen oftmals die notwendige mechanische Stabilität und strukturelle Integrität; diese Systeme sind vielmehr flexibel und nicht formstabil ausgebildet. Darüber hinaus besitzen diese Systeme gegenüber Kunststoffplatten bzw. Vakuumdämmplatten eine deutlich geringere Dämmwirkung.

Sämtlichen Wärmedämmverbundsystemen, welche auf organischen Polymeren basieren bzw. organische Naturstoffe enthalten, ist gemein, dass sie brennbar sind und zur Verminderung der Brennbarkeit bzw. Entflammbarkeit im Allgemeinen mit speziellen Chemikalien behandelt werden müssen, was jedoch wiederum oftmals mit einer erhöhten Umweltbelastung und Gesundheitsgefährdung einhergeht.

Darüber hinaus werden auch Dämmputze, welche ein Bindemittel sowie wärmedämmende Zuschläge enthalten, eingesetzt. Derartige Dämmputze sind im Regelfall diffusionsoffen, d. h. Feuchtigkeit aus dem Mauerwerk kann an die Umgebung abgegeben werden, jedoch sind die Dämmwirkung sowie die mechanische Belastbarkeit derartiger Dämmputze gegenüber Wärmedämmverbundsystemen deutlich herabgesetzt, was den Einsatz von Wärmedämmputzen auf wenige Anwendungsfälle beschränkt.

Es hat daher im Stand der Technik nicht an Versuchen gefehlt, die vorhandenen Wärmedämmsysteme zur Wärmedämmung von Gebäuden zu verbessern:
So betrifft beispielsweise die DE 10 2012 101 931 A1 ein Fassadendämmsystem mit einer Unterkonstruktion in Holzständerbauweise, einer aus Mineralwollplatten gebildeten Dämmlage und einer Putzschicht, wobei auf der Dämmlage ein Trägergewebe vorliegt, welches der Dämmung eine erhöhte mechanische Belastbarkeit verleihen soll.

Weiterhin betrifft die DE 10 2010 029 513 A1 eine Wärmedämmpulvermischung, welche zu Wärmedämmformkörpern verarbeitet wird und aus einer Mischung von Kieselsäure und mindestens einem Fasermaterial besteht.

Die DE 10 2011 109 661 A1 betrifft eine Dämmstoffplatte sowie eine spezielle Anordnung mehrerer Dämmstoffplatten an einer Gebäudewand, welche mittels eines kapillaraktiven Klebstoffs zur Feuchtigkeitsregulierung verbunden sind.

Während die vorgenannten Systeme einzelne Aspekte der gängigen Wärmedämmsysteme zumindest punktuell verbessern können, ermöglichen sie jedoch nicht, die prinzipiellen Nachteile der gängigen Wärmedämmsysteme auszuräumen.

Darüber hinaus wird gleichsam versucht, die Effizienz von Wärmedämmsystemen durch Einsatz spezieller Materialien zu verbessern. Insbesondere wird versucht, Aerogele in Dämmstoffe bzw. Dämmstoffsyteme einzuarbeiten, um deren Dämmwirkung zu erhöhen. Aerogele sind hochporöse Festkörper, die zu mehr als 90 Vol.-% aus Poren bestehen. Aufgrund der extrem hohen Porosität eignen sich Aerogele zumindest theoretisch in hervorragender Weise zur Wärmedämmung und besitzen Wärmeleitfähigkeitszahlen λ im Bereich von 0,012 bis 0,020 W/(mK). Die üblicherweise für Dämmzwecke eingesetzten Aerogele bestehen aus Siliciumdioxid bzw. kondensierter Kieselsäure und werden durch Sol-Gel-Verfahren aus Silikaten gewonnen. Neben den guten Wärmedämmeigenschaften zeichnen sich Aerogele weiterhin durch eine gute Schallisolierung sowie Nichtbrennbarkeit aus. Bedingt durch die hohe Porosität besitzen Aerogele jedoch nur eine äußerst geringe mechanische Stabilität und werden selbst bei geringen mechanischen Belastungen zerstört.

Aufgrund der guten Wärmedämmeigenschaften von insbesondere silikatbasierten Aeorgelen sind trotzdem zahlreiche Versuche unternommen worden, Aerogele in Dämmstoffe einzubauen. Unter anderem wird Aerogel in Dämmplatten aus Steinwolle eingearbeitet; ein entsprechendes Produkt ist unter der Handelsbezeichnung Aerowolle® kommerziell erhältlich.

Darüber hinaus wurden auch Versuche unternommen, Aerogele in Dämmputze einzuarbeiten, wobei sich jedoch speziell die maschinelle Verarbeitbarkeit, insbesondere der Auftrag des Dämmputzes mittels Putzmaschinen, als schwierig herausstellt, da die fragilen Aerogelpartikel bei der Aufbringung auf die Gebäudewand unter Druck üblicherweise zerstört werden.

Die DE 10 2011 119 029 A1 bzw. die EP 2 597 072 A1 betrifft einen Dämmstoff zur Herstellung eines Dämmelementes, wobei der Dämmstoff Aerogelpartikel und wenigstens ein anorganisches bzw. organisches Bindemittel enthält. Der Bindemittelanteil soll weniger als 3 Vol.-%, bezogen auf das gesamte Volumen des Dämmstoffs, betragen und der Dämmstoff enthält weiterhin expandierte bzw. extrudierte Styrolpolymerisatpartikel.

Die WO 2010/126792 A1 offenbart Zusammensetzungen mit einer Aerogel-Komponente, welche eine geringe thermische Leitfähigkeit aufweisen. Darüber hinaus werden Verfahren zur Herstellung von Aufschlämmungen und Zusammensetzungen offenbart, welche beispielsweise das Versetzen der Aerogel-Komponente mit einem Tensid, einem Bindemittel und weiteren Inhaltsstoffen, wie z.B. Fasern, beinhalten. Die Zusammensetzungen können Aufschlämmungen sein, welche in Beschichtungsanwendungen oder als selbsttragende feste Kompositmaterialien Verwendung finden können.

Die US 6,217,646 B1 betrifft eine Mörtelzusammensetzung zum Druckauftrag mittels Sprühens zum Ausgleich einer Oberfläche. Die Mörtelzusammensetzung enthält als aktive Inhaltsstoffe hydraulischen Kalk, Portland-Zement und Vinylacetat-Trockenpolymer. Darüber hinaus weist die Zusammensetzung als Füllstoff und als Hauptgewichtsbestandteil einen mineralischen Füllstoff, vorzugsweise Quarzsand, auf. Nach Aufbringung des Mörtels auf eine Oberfläche kann dieser nach einem ersten Aushärtevorgang noch oberflächenmodelliert werden. Darüber hinaus können verschiedenste Additive zur Verbesserung des Eigenschaftsprofils der Mörtelzusammensetzung verwendet werden. Diese optionalen Additive beinhalten hohle Glas- oder Keramikkugeln, Entschäumer, Wasserretentionsmittel, Rheologiestellmittel, Hydrophobierungsmittel, Entwässerungsmittel und Beschleuniger.

Weiterhin betrifft die EP 2 722 319 A2 eine Dämmputzzusammensetzung zur Ausbildung einer Schall- und/oder Wärmedämmung einer Gebäudewand oder -decke, umfassend Aerogel-Partikel und wenigstens ein Bindemittel. Die Zusammensetzung enthält wenigstens ein zementöses Bindemittel, insbesondere eine zement-öse Bindemittelkombination. Darüber hinaus wird ein Verfahren zur Ausbildung einer Schall- und/oder Wärmedämmung sowie eine Schall- und/oder Wärmedämmung aus einer Dämmputzzusammensetzung beschrieben. Ferner wird ein Wärmedämmsystem umfassend eine Schall- und/oder Wärmedämmung aus einer Dämmputzzusammensetzung beschrieben.

Die EP 2 799 409 A1 betrifft eine Trockenmischung zur Herstellung von hochleistungsfähigen Isolationsmaterialien, welche im Wesentlichen aus 60 bis 90 Vol.-% eines hydrophobierten partikelförmigen Silica-Aerogels, 0,5 bis 30 Vol.-% eines rein mineralischen Bindemittels, 0,2 bis 20 Vol.-% eines offenporigen wasserunlöslichen oder langsam wasserlöslichen Additivs, bis zu 5 Vol.-% verstärkender Fasern und bis zu 5 Vol.-% an Verarbeitungshilfsmitteln besteht. Nach Mischen der Trockenzusammensetzung mit Wasser kann die entstehende Aufschlämmung auf eine Oberfläche aufgebracht oder zu selbsttragenden Formkörpern ausgebildet werden, wobei Hochdruck angewendet werden kann, ohne dass die thermische Isolationsfähigkeit beeinträchtigt wird.

Aber auch mit den vorgenannten Systemen ist es bislang nicht gelungen, die prinzipiellen Nachteile der Verwendung von Aerogelen, nämlich die geringere mechanische Belastbarkeit und die daraus folgende herabgesetzte Haltbarkeit sowie die in der Praxis deutlich reduzierte Dämmwirkung der Dämmstoffe entscheidend zu verbessern.

Der vorliegenden Erfindung liegt daher die Aufgabe zugrunde, Wärmedämmstoffsysteme zur Verfügung zu stellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist es eine Aufgabe der vorliegenden Erfindung, eine Baustofftrockenmischung zur Herstellung von Wärmedämmputzen bereitzustellen, welche sich wie übliche Wärmedämmputze verarbeiten lässt, jedoch deutlich verbesserte Wärmedämmeigenschaften aufweist.

Darüber hinaus ist es eine weitere Aufgabe der vorliegenden Erfindung, Wärmedämmsysteme, insbesondere Wärmedämmverbundsysteme, bereitzustellen, welche diffusionsoffen sind, gegenüber bisherigen Systemen eine deutlich verringerte Dicke aufweisen und gleichzeitig verbesserte Wärmedämmeigenschaften besitzen.

Die zuvor geschilderte Aufgabenstellung wird erfindungsgemäß durch eine Baustofftrockenzusammensetzung nach Anspruch 1 gelöst; weitere vorteilhafte Weiterbildungen und Ausgestaltungen der erfindungsgemäßen Baustofftrockenzusammensetzung sind Gegenstand der diesbezüglichen Unteransprüche.

Weiterer Gegenstand der vorliegenden Erfindung ist die Verwendung der erfindungsgemäßen Baustofftrockenmischung zur Herstellung eines Dämmputzes gemäß Anspruch 4.

Ein weiterer Gegenstand der vorliegenden Erfindung ist ein Dämmputz nach Anspruch 5 bzw. nach Anspruch 6.

Wiederum weiterer Gegenstand der vorliegenden Erfindung ist ein mehrschichtiges Dämmputzsystem nach Anspruch 7; weitere, vorteilhafte Weiterbildungen und Ausgestaltungen dieses Erfindungsaspekts sind Gegenstand de diesbezüglichen Unteranspruchs.

Wiederum weiterer Gegenstand der vorliegenden Erfindung ist ein Wärmedämmverbundsystem, aufweisend eine Wärmedämmplatte sowie ein Dämmputzsystem, gemäß Anspruch 10; weitere, vorteilhafte Weiterbildungen und Ausgestaltungen dieses Erfindungsaspekts sind Gegenstand des diesbezüglichen Unteranspruchs.

Schließlich ist wiederum weiterer Gegenstand der vorliegenden Erfindung eine Dämmputzplatte nach Anspruch 12.

Es versteht sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebene Bestimmungsverfahren oder aber mit dem Fachmann auf diesem Gebiet an sich geläufigen Bestimmungsmethoden ermittelt bzw. bestimmt werden können.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit eine Baustofftrockenmischung zur Herstellung eines Dämmputzes, wobei die Baustofftrockenmischung
(A) ein Aerogel in Mengen von 5 bis 35 Gew.-%, bezogen auf die Baustofftrockenmischung,
(B) mindestens einen Leichtzuschlag, insbesondere Perlit, in Mengen von 40 bis 75 Gew.-%, bezogen auf die Baustofftrockenmischung,
(C) mindestens ein kalkbasiertes Bindemittel, insbesondere hydraulischen Kalk, in Mengen von 8 bis 40 Gew.-%, bezogen auf die Baustofftrockenmischung,
(D) mindestens ein zementbasiertes Bindemittel, insbesondere Weißzement, in Mengen von 1,5 bis 10 Gew.-%, bezogen auf die Baustofftrockenmischung, und
(E) mindestens ein Additiv in Mengen von 0,1 bis 5 Gew.-%, bezogen auf die Baustofftrockenmischung,
enthält, wobei die Baustofftrockenmischung das Aerogel und den Leichtzuschlag in einem
gewichtsbasierten Verhältnis von Aerogel zu Leichtzuschlag von 1 : 1 bis 1 : 13 enthält und wobei die Baustofftrockenmischung das kalkbasierte Bindemittel und das zementbasierte Bindemittel in einem gewichtbasierten Verhältnis von kalkbasiertem Bindemittel zu zementbasiertem Bindemittel von 1 : 1 bis 15 : 1 enthält.

Im Rahmen der vorliegenden Erfindung wird es dabei bevorzugt, wenn das Aerogel auf Silikatbasis ausgebildet ist, insbesondere zumindest im Wesentlichen aus Siliciumdioxid besteht, vorzugsweise ein reines Siliciumdioxid-Aerogel ist.

Das Aerogel kann gegebenenfalls hydrophobiert sein, was einerseits die wasserabweisenden Eigenschaften des Dämmstoffs positiv beeinflusst, andererseits jedoch die Porosität des Aerogels herabsetzt und somit die Dämmwirkung - wenngleich nur geringfügig - abschwächt. Darüber hinaus entspricht ein hydrophobiertes Aerogel nicht mehr der Brennstoffklasse A1 gemäß DIN EN 13501-1 und DIN 4102-1, sondern A2, d. h. es müssen Nachweise für die tatsächliche Nichtbrennbarkeit des Aerogels erbracht werden.

Die Hydrophobierung des Aerogels kann mit gängigen Methoden erfolgen, was dem Fachmann jedoch geläufig ist, so dass an dieser Stelle auf weitere Ausführungen verzichtet werden kann. Exemplarisch kann beispielsweise verwiesen werden auf U. K. H. Bangi, A. V. Rao und A. P. Rao "A new route for preparation of sodium-silicate-based hydrophobic silica aerogels via ambient-pressure drying", Sci. Technol. Adv. Mater. 9, 2008.

Mit der erfindungsgemäßen Baustofftrockenmischung sind Dämmputze zugänglich, welche gegenüber herkömmlichen Aerogel enthaltenden Dämmputzen eine deutlich verbesserte mechanische Beständigkeit aufweisen.

Die erfindungsgemäße Baustofftrockenmischung kann wie gängige, aerogelfreie Putzsysteme durch einfaches Anmachen mit Wasser zu einem Dämmputz verarbeitet werden, welcher sich maschinell auf Gebäudewände aufbringen lässt und sowohl allein als auch im Wärmedämmverbundsystem gegenüber dem Stand der Technik deutlich verbesserte Wärmedämmeigenschaften besitzt.

Darüber hinaus ist der erfindungsgemäße Dämmputz diffusionsoffen, d. h. Feuchtigkeit aus dem Mauerwerk kann an die Umgebung abgegeben werden, wodurch die rein theoretisch erreichbaren Wärmedurchgangskoeffizienten der Dämmstoffe tatsächlich auch erreicht werden.

Vorzugsweise enthält die Baustofftrockenmischung das Aerogel in Mengen von 10 bis 30 Gew.-%, ganz besonders bevorzugt 15 bis 25 Gew.-%, bezogen auf die Baustofftrockenmischung. Insbesondere in den zuvor genannten Mengenbereichen werden besonders stabile und haltbare Dämmputze erhalten, welche gegenüber üblichen Dämmputzsystemen deutlich verbesserte Dämmeigenschaften aufweisen.

Besonders gute Ergebnisse werden im Rahmen der vorliegenden Erfindung erhalten, wenn das in der Baustofftrockenmischung enthaltende Aerogel eine Partikelgröße von 0,01 bis 10 mm, insbesondere 0,05 bis 8 mm, vorzugsweise 0,1 bis 7 mm, bevorzugt 0,2 bis 6 mm, besonders bevorzugt 0,5 bis 5 mm, ganz besonders bevorzugt 0,5 bis 4 mm, äußerst bevorzugt 0,5 bis 2 mm, aufweist. Die im Rahmen der vorliegenden Erfindung verwendeten Aerogele mit Partikelgrößen in den zuvor genannten Bereichen besitzen einerseits im Allgemeinen eine relativ hohe mechanische Stabilität und sind andererseits besonders kompatibel zu den weiteren in der Baustofftrockenmischung vorhandenen Partikeln.

Üblicherweise weist das Aerogel eine Schüttdichte von 0,05 bis 0,320 g/cm³, insbesondere 0,08 bis 0,27 g/cm³, vorzugsweise 0,12 bis 0,25 g/cm³, bevorzugt 0,13 bis 0,22 g/cm³, besonders bevorzugt 0,14 bis 0,20, ganz besonders bevorzugt 0,15 bis 0,16 g/cm³, auf.

Besonders gute Ergebnisse werden im Rahmen der vorliegenden Erfindung erhalten, wenn das Aerogel absolute Porendurchmesser im Bereich von 2 bis 400 nm, insbesondere 5 bis 300 nm, vorzugweise 8 bis 200 nm, bevorzugt 10 bis 130 nm, besonders bevorzugt 10 bis 70 nm, besitzt. Aerogele, welche Porengrößen im vorgenannten Bereich besitzen, weisen einerseits eine äußerst geringe Wärmeleitfähigkeit und andererseits eine vergleichsweise hohe mechanische Stabilität auf.

Gemäß einer bevorzugten Ausführungsform der vorliegenden Erfindung ist das Aerogel unter den Auftragsbedingungen der angemachten Baustofftrockenmischung, d. h. insbesondere als Dämmputz, zumindest im Wesentlichen formstabil. Dabei wird es insbesondere bevorzugt, wenn mindestens 70 Gew.-%, vorzugsweise mindestens 80 Gew.-%, bevorzugt mindestens 90 Gew.-%, besonders bevorzugt mindestens 95 Gew.-%, der eingesetzten Aerogelpartikel unter Auftragsbedingungen formstabil bleiben. Es ist eine Besonderheit des erfindungsgemäß eingesetzten Aerogels, dass die Aerogelpartikel, insbesondere bei maschineller Auftragung, speziell mit Hilfe von Putzmaschinen, bei welcher ein Druck von bis zu 7 oder 8 bar auf die Aerogelpartikel einwirkt, formstabil bleiben und nicht zerstört werden, was zu den besonders guten Wärmedämmeigenschaften bei gleichzeitig hoher mechanischer Widerstandsfähigkeit des erfindungsgemäßen Dämmputzes führt.

Mit Aerogelen, welche die vorgenannten Parameter und Eigenschaften aufweisen, kann ein mechanisch besonders widerstandsfähiger, haltbarer und ausgezeichnet wärmedämmender Dämmputz erhalten werden. Insbesondere zeigen die Aerogel-partikel bei ihrer Einarbeitung in den Putz bzw. in die Baustofftrockenmischung eine deutlich höhere mechanische Belastbarkeit und Widerstandsfähigkeit als dies bislang bei vergleichbaren Produkten des Standes der Technik der Fall ist.

Im Rahmen der vorliegenden Erfindung gleichfalls bevorzugt eingesetzte hydrophobierte Aerogele besitzen einen Kontaktwinkel mit Wasser von 110 bis 165°. Ferner kann die Wärmeleitfähigkeit derartiger bevorzugt eingesetzter hydrophobierter Aerogele im Bereich von 0,015 bis 0,032 W/(mK), insbesondere 0,019 bis 0,025 W/(mK), vorzugsweise 0,020 bis 0,022 W/(mK), liegen. Besonders gut Ergebnisse werden im Rahmen der vorliegenden Erfindung jedoch auch erhalten, wenn die Wärmeleitfähigkeit der Aerogele im Bereich von 0,015 bis 0,016 W/(mK) liegt.

Darüber hinaus ist es im Rahmen der vorliegenden Erfindung vorgesehen, dass die Baustofftrockenmischung außerdem mindestens einen Leichtzuschlag enthält.

Die im Rahmen der vorliegenden Erfindung eingesetzten bzw. verwendeten Zuschläge sind dem Fachmann als solche bekannt. Unter dem Begriff "Zuschlag" sind im Rahmen der vorliegenden Erfindung insbesondere Betonzuschläge nach DIN 1045 zu verstehen. Bei den Zuschlägen handelt es sich um Füllstoffe mit Korngrößen, die für die jeweilige Bindemittelherstellung geeignet sind. Für weitergehende Informationen zu dem Begriff "Zuschlag" kann insbesondere verwiesen werden auf Römpp Chemielexikon, 10. Auflage, Georg-Thieme-Verlag, Stuttgart/New York, Band 1, 1998, Seiten 419 und 420, Stichwort: "Betonzuschlag" sowie die dort referierte Literatur, deren jeweiliger Inhalt hiermit durch Bezugnahme vollumfänglich eingeschlossen ist.

Der Zuschlag ist im Allgemeinen ausgewählt aus natürlichen oder künstlichen Gesteinen, Metallen oder Gläsern. In diesem Zusammenhang werden im Rahmen der vorliegenden Erfindung besonders gute Ergebnisse erhalten, wenn der Zuschlag ein Leichtzuschlag ist, insbesondere mit einer Kornrohdichte von höchstens 2,0 kg/dm³.Hierbei hat es sich als vorteilhaft erwiesen, wenn der Leichtzuschlag ausgewählt ist aus der Gruppe von vulkanischem Gestein, Perlit, Vermiculit, Bims, Schaum- und Blähglas, Blähton, Blähschiefer, Styropor, Tuff, Blähglimmer, Lavakies, Lavasand, Schaumkunststoffen und deren Mischungen, vorzugsweise Perlit. Gleichfalls werden im Rahmen der vorliegenden Erfindung besonders gute Ergebnisse erhalten, wenn der Leichtzuschlag Korngrößen von höchstens 4 mm, insbesondere von höchstens 3 mm, aufweist. Leichtzuschläge mit vorgenannten Partikelgrößen, insbesondere im Fall von Perlit, können mit den Aerogelpartikeln - ohne sich auf diese Theorie festlegen zu wollen - in Wechselwirkung treten, wobei das Aerogel insbesondere in den zwischen den einzelnen Perlitpartikeln vorhandenen Hohlräumen in der Baustofftrockenmischung sowie im Dämmputz eingelagert wird und dort vor mechanischer Zerstörung geschützt ist.

Im Rahmen der vorliegenden Erfindung kann es vorgesehen sein, dass die Baustofftrockenmischung den Leichtzuschlag in Mengen von 45 bis 70 Gew.-%, besonders bevorzugt, 50 bis 65 Gew.-%, bezogen auf die Baustofftrockenmischung enthält.

Besonders gute Ergebnisse werden im Rahmen der vorliegenden Erfindung erhalten, wenn die Baustofftrockenmischung das Aerogel und den Leichtzuschlag in einem gewichtsbasierten Verhältnis von Aerogel zu Leichtzuschlag von 1 : 2 bis 1 : 6, ganz besonders bevorzugt 1 : 2 bis 1 : 4, enthält.

Insbesondere in den zuvor genannten gewichtsbasierten Verhältnissen von Aerogel zu Leichtzuschlag zeigt sich, dass die Aerogelpartikel im Dämmputz, insbesondere auch bei maschinellem Auftrag, erhalten bleiben.

Die Baustofftrockenmischung enthält erfindungsgemäß Bindemittel. Insbesondere werden besonders gute Ergebnisse erhalten, wenn die Baustofftrockenmischung die Bindemittel in Mengen 10 bis 50 Gew.-%, bevorzugt 12 bis 40 Gew.-%, besonders bevorzugt 15 bis 35 Gew.-%, enthält. Die erfindungsgemäße Baustofftrockenmischung sowie der erfindungsgemäße Wärmedämmputz enthalten somit die Bindemittel vorzugsweise in einem eher geringen Maße, während Aerogel und Zuschlagstoffe in einem deutlich höheren Maße vorhanden sind, was zu deutlich verbesserten Wärmedämmeigenschaften führt.

Im Rahmen der vorliegenden Erfindung weist die Baustofftrockenmischung mindestens zwei unterschiedliche Bindemittel auf. Erfindungsgemäß weist die Baustofftrockenmischung ein kalkbasiertes Bindemittel, insbesondere hydraulischen Kalk, und ein zementbasiertes Bindemittel, insbesondere Weißzement, auf. Mischungen der vorgenannten Bindemittel weisen ein besonders gutes Abbindeverhalten auf, besitzen eine Konsistenz und Viskosität, welche eine gute Auftragbarkeit des Dämmputzes gewährleisten und führen trotz des hohen Anteils an Zuschlagstoffen zu einer hervorragenden Endfestigkeit. Darüber hinaus hemmt der Kalkanteil durch seine hohe Alkalität zusätzlich die Bildung von Schimmel und Algen. Der erfindungsgemäße Dämmputz, welcher mit der Baustofftrockenmischung erhältlich ist, ist zwar diffusionsoffen, so dass einer Schimmelbildung von vornherein entgegengewirkt wird, die Verwendung eines kalkbasierten Bindemittels unterdrückt jedoch auch die Bildung von Schimmel und Algen für den Fall, dass das Dämmputzsystem unter ungünstigen Bedingungen aufgetragen ist.

Unter einem hydraulischen Kalk wird dabei im Rahmen der vorliegenden Erfindung eine Mischung aus gebranntem Kalk (Calciumhydroxid) mit Hydraulefaktoren, wie beispielsweise Calciumsilikaten und Calciumaluminaten oder auch Eisenoxid, verstanden. Der hydraulische Anteil des Bindemittels härtet durch Hydratation und benötigt kein Kohlendioxid zum Abbinden. Hierdurch erhält das Bindemittel eine hohe Anfangsfestigkeit, während der nicht hydraulische Teil des Kalks langsam durch Diffusion von Kohlendioxid im Dämmputz aushärtet bzw. abbindet.

Erfindungsgemäß weist die Baustofftrockenmischung das kalkbasierte Bindemittel in Mengen von 8 bis 40 Gew.-%, besonders bevorzugt 10 bis 30 Gew.-%, ganz besonders bevorzugt 15 bis 30 Gew.-%, bezogen auf die Baustofftrockenmischung, enthält.

Im Rahmen der vorliegenden Erfindung ist es weiterhin vorgesehen, dass die Baustofftrockenmischung das zementbasierte Bindemittel in Mengen von 1,5 bis 10 Gew.-%, besonders bevorzugt 2 bis 8 Gew.-%, ganz besonders bevorzugt 2 bis 5 Gew.-%, bezogen auf die Baustofftrockenmischung, enthält.

Gemäß einer besonderes bevorzugten Ausführungsform der vorliegenden Erfindung enthält die Baustofftrockenmischung das kalkbasierte Bindemittel und das zementbasierte Bindemittel in einem gewichtbasierten Verhältnis von kalkbasiertem Bindemittel zu zementbasiertem Bindemittel von 2 : 1 bis 10 : 1, besonders bevorzugt 3 : 1 bis 8 : 1, ganz besonders bevorzugt 4 : 1 bis 7 : 1.

Weiterhin ist es im Rahmen der vorliegenden Erfindung vorgesehen, dass die Baustofftrockenmischung mindestens ein Additiv, insbesondere mindestens ein Zusatzmittel, enthält. Hierbei kann es vorgesehen sein, dass das Additiv ausgewählt ist aus der Gruppe von Verflüssigern, Verdickern, Verzögerern, Beschleunigern, Stabilisierungsmitteln (Stabilisatoren), Rheologiestellmitteln, Zusatzmitteln zur Einstellung des Wasserrückhaltevermögens (Wasserretentionsmitteln), Dispergiermitteln, Dichtungsmitteln, Luftporenbildnern sowie deren Mischungen.

Erfindungsgemäß ist es vorgesehen, dass die Baustofftrockenmischung das Additiv in Mengen von 0,1 bis 5 Gew.-%, vorzugsweise 0,3 bis 3 Gew.-%, bevorzugt 0,5 bis 1 Gew.-%, bezogen auf die Baustofftrockenmischung, enthält.

Darüber hinaus kann es im Rahmen der vorliegenden Erfindung vorgesehen sein, dass die Baustofftrockenmischung eine Schüttdichte im Bereich von 100 bis 400 kg/m³, insbesondere 150 bis 350 kg/m³, vorzugsweise 175 bis 300 kg/m³, bevorzugt 200 bis 250 kg/m³, aufweist.

Ein weiterer Gegenstand der vorliegenden Erfindung - gemäß einem **zweiten** Aspekt der vorliegenden Erfindung - ist die Verwendung einer Baustofftrockenmischung, insbesondere eines Putzmörtels, wie zuvor beschrieben, zur Herstellung eines Dämmputzes, insbesondere eines Wärmedämmputzes, zur Wärmedämmung von Bauwerken, insbesondere von Gebäuden.

Für weitere Einzelheiten zu diesem Erfindungsaspekt kann auf die vorangehenden Ausführungen zu der erfindungsgemäßen Baustofftrockenmischung verwiesen werden, welche in Bezug auf die erfindungsgemäße Verwendung entsprechend gelten.

Weiterer Gegenstand der vorliegenden Erfindung - gemäß einem **dritten** Aspekt der vorliegenden Erfindung - ist ein Dämmputz, insbesondere ein Wärmedämmputz, zur Wärmedämmung von Bauwerken bzw. Gebäuden, welcher aus einer zuvor beschriebenen Baustofftrockenmischung durch Anmachen mit Wasser der Baustofftrockenmischung in Mengen von 70 bis 150 Gew.-%, bezogen auf die Baustofftrockenmischung, erhältlich ist, wobei der ausgehärtete Dämmputz eine Druckfestigkeit von 0,4 bis 2,5 N/mm² aufweist.

Im Rahmen der vorliegenden Erfindung werden besonders gute Ergebnisse erhalten, wenn der Dämmputz durch Anmachen mit Wasser in Mengen von 80 bis 130 Gew.-%, vorzugsweise 90 bis 110 Gew.-%, bezogen auf die Baustofftrockenmischung, erhältlich ist wird. Der erfindungsgemäße Dämmputz kann folglich wie ein herkömmlicher, aus dem Stand der Technik bekannter Dämmputz angemacht und auch verarbeitet werden.

Üblicherweise besitzt der ausgehärtete Dämmputz bereits ohne weitere Beschichtung eine hervorragende Barrierewirkung gegenüber flüssigem Wasser, wohingegen Wasserdampf relativ problemlos durch den ausgehärteten Dämmputz hindurch diffundieren kann. So besitzt der ausgehärtete Dämmputz im Rahmen der vorliegenden Erfindung üblicherweise einen Wasseraufnahmekoeffizienten w im Bereich von 1,0 bis 1,8 kg/(m² • h^{0,5}), insbesondere 1,10 bis 1,80 kg/(m² • h^{0,5}), vorzugsweise 1,20 bis 1,70 kg/(m² • h^{0,5}).

Im Allgemeinen wird der Dämmputz mittels gängiger Methoden auf die zu behandelnde Oberfläche aufgebracht, insbesondere mittels maschineller Spritzverfahren. Es ist eine Besonderheit des erfindungsgemäßen Dämmputzes, dass er trotz seines hohen Gehalts an Aerogel mittels maschineller Spritzverfahren, insbesondere mittels Putzmaschinen, auf die zu dämmende Oberfläche, insbesondere Hauswand, aufgebracht werden kann. Wie bereits im Zusammenhang mit dem ersten Erfindungsaspekt ausgeführt, zeichnet sich der erfindungsgemäße Dämmputz dadurch aus, dass das in ihm enthaltene Aerogel unter Auftragsbedingungen, insbesondere bei maschineller Auftragung, zumindest im Wesentlichen formstabil ist, insbesondere wobei mindestens 70 Gew.-%, insbesondere mindestens 80 Gew.-%, vorzugsweise mindestens 90 Gew.-%, bevorzugt mindestens 95 Gew.-%, der eingesetzten Aerogelpartikel formstabil bleiben.

Für weitere Einzelheiten zu diesem Erfindungsaspekt kann auf die vorangehenden Ausführungen zu der erfindungsgemäßen Baustofftrockenmischung sowie zu der erfindungsgemäßen Verwendung verwiesen werden, welche in Bezug auf den erfindungsgemäßen Dämmputz entsprechend gelten.

Weiterer Gegenstand der vorliegenden Erfindung - gemäß einem **vierten** Aspekt der vorliegenden Erfindung - ist ein Dämmputz, enthaltend mindestens ein Aerogel, welcher insbesondere aus einer zuvor beschriebenen Baustofftrockenmischung erhältlich ist, wobei der ausgehärtete Dämmputz eine Wärmeleitfähigkeit im Bereich von 0,02 bis 0,055 W/(mK), insbesondere 0,022 bis 0,050 W/(mK), vorzugsweise 0,024 bis 0,045 W/(mK), bevorzugt 0,026 bis 0,040 W/(mK), besonders bevorzugt 0,028 bis 0,032 W/(mK), aufweist. Der erfindungsgemäße Dämmputz weist somit Wärmeleitfähigkeiten auf, wie sie üblicherweise nur bei Wärmedämmverbundsystemen beobachtet werden.

Im Allgemeinen weist der ausgehärtete Dämmputz eine Druckfestigkeit von 0,4 bis 2,5 N/mm², insbesondere 0,4 bis 2,0 N/mm², vorzugsweise 0,45 bis 1,6 N/mm², bevorzugt, 0,45 bis 1,4 N/mm², auf. Der erfindungsgemäße Aerogel enthaltende Dämmputz weist somit für Wärmedämmputze eine äußerst hohe Druckfestigkeit auf.

Im Rahmen der vorliegenden Erfindung wird es bevorzugt, wenn der ausgehärtete Dämmputz eine Wasserdampfdiffusionswiderstandszahl µ, bestimmt nach DIN EN ISO 12542, im Bereich von 2 bis 9, insbesondere 3 bis 7, vorzugsweise 4 bis 6, aufweist. Wie zuvor bereits erwähnt, zeichnet sich der erfindungsgemäße Dämmputz dadurch aus, dass er diffusionsoffen ist und Feuchtigkeit vom Mauerwerk an die Umgebung abgegeben werden kann, was der Bildung von Schimmel und Algen entgegenwirkt und darüber hinaus die Haltbarkeit des Wärmedämmsystems erhöht.

Üblicherweise weist der ausgehärtete Dämmputz eine Trockenrohdichte im Bereich von 200 bis 350 kg/m³, insbesondere 225 bis 325 kg/m³, vorzugsweise 250 bis 300 kg/m³, auf.

Was die Schichtdicke anbelangt, mit welcher der Dämmputz auf eine Fläche, insbesondere auf eine Gebäudewand, aufgetragen wird, so kann diese in weiten Bereichen variieren. Besonders gute Ergebnisse werden jedoch im Rahmen der vorliegenden Erfindung erzielt, wenn der ausgehärtete Dämmputz mit einer Schichtdicke von 1 bis 14 cm, insbesondere 1 bis 10 cm, vorzugsweise 1 bis 8 cm, bevorzugt 2 bis 7 cm, besonders bevorzugt 3 bis 6 cm, auf die zu dämmende Fläche, insbesondere die Innen- oder Außenfläche einer Gebäudewand, aufgebracht ist. Dabei wird es weiterhin bevorzugt, wenn der ausgehärtete Dämmputz auf die Außenfläche einer Gebäudewand aufgebracht ist, d. h. als Außendämmung eingesetzt wird. Der Auftrag des erfindungsgemäßen Wärmedämmputzes kann dabei insbesondere direkt auf das Mauerwerk erfolgen, oder das Mauerwerk kann vorher spezifisch vorbereitet worden sein, beispielsweise durch Aufbringung einer Grundierung. Grundierungen, welche das Mauerwerk verfestigen bzw. eine verbesserte Haftung des Putzes am Mauerwerk bewirken, sind dem Fachmann ohne Weiteres bekannt, so dass an dieser Stelle auf weitere Ausführungen verzichtet werden kann.

Was die Schichtdicke des ausgehärteten Dämmputzes weiterhin anbelangt, so gelten die oben genannten Wertebereiche nur für eine alleinige Auftragung des erfindungsgemäßen Dämmputzes bzw. eines Dämmputzsystems, welches den erfindungsgemäßen Dämmputz enthält, wohingegen bei der Verwendung des erfindungsgemäßen Dämmputzes in einem Wärmedämmverbundsystem (WDVS), insbesondere in einem eine Wärmedämmplatte aufweisenden Wärmedämmverbundsystem (WDVS), deutlich geringere Schichtdicken des erfindungsgemäßen Dämmputzes eingesetzt werden, wie nachfolgend noch ausgeführt wird.

Es ist eine Besonderheit des erfindungsgemäßen Dämmputzes, dass er sowohl für den Innen- als auch für den Außenbereich angewendet werden kann, insbesondere wobei selbst bei alleiniger Verwendung des erfindungsgemäßen Dämmputzes bzw. eines diesen enthaltenden Dämmputzsystems im Bereich der Außendämmung hervorragende Wärmedämmergebnisse bei gleichzeitig sehr guter mechanischer Belastbarkeit erzielt werden. Der alleinige Auftrag des erfindungsgemäßen Wärmedämmputzes bzw. eines Dämmputzsystems empfiehlt sich beispielsweise dann, wenn die Konturen eines Gebäudes detailgetreu nachgezeichnet werden sollen. Andernfalls ist ein Wärmedämmverbundsystem (WDVS) vorzuziehen, da mit diesem eine noch bessere Wärmedämmung erzielt werden können.

Im Rahmen der vorliegenden Erfindung kann es weiterhin vorgesehen sein, dass der ausgehärtete Dämmputz die Brennbarkeit A1 oder A2 gemäß DIN 4102 aufweist. Da der erfindungsgemäße Dämmputz vorzugsweise rein mineralisch basiert ist, ist er nicht brennbar und besitzt die Brennbarkeit A1 gemäß DIN 4102. Bei Verwendung hydrophobierter Aerogele sowie organischer Additive ist der erfindungsgemäße Dämmputz immer noch nicht brennbar, wofür jedoch ein Nachweis erbracht werden muss, was einer Brennbarkeit A2 gemäß DIN 4102 entspricht.

Für weitere Einzelheiten zu diesem Erfindungsaspekt kann auf die vorangehenden Ausführungen zu den übrigen Erfindungsaspekten verwiesen werden, welche in Bezug auf den erfindungsgemäßen Dämmputz entsprechend gelten.

Gegenstand der vorliegenden Erfindung - gemäß einem **fünften** Aspekt der vorliegenden Erfindung - ist ein mehrschichtiges Dämmputzsystem, welches mindestens eine Dämmputzschicht, bestehend aus einem mindestens ein Aerogel enthaltenden Dämmputz wie zuvor beschrieben, und einer Oberflächenbeschichtung aufweist, wobei die Oberflächenbeschichtung zumindest an einer mit dem Dämmputzsystem versehenen Fläche, insbesondere einer Gebäudewand, abgewandten Seite der Dämmputzschicht angeordnet ist. Hierbei wird es bevorzugt, wenn die Oberflächenbeschichtung die der mit dem Dämmputzsystem versehenen Fläche abgewandte Seite der Dämmputzschicht zumindest im Wesentlichen bedeckt.

Der Auftragung der Oberflächenbeschichtung kann dabei durchgängig oder nur bereichsweise erfolgen, wobei eine durchgängige Oberflächenbeschichtung insbesondere an der Außenseite des Dämmputzsystems, d. h. an der der zu dämmenden Fläche abgewandten Seite des Dämmputzsystems, bevorzugt wird.

Im Allgemeinen ist die Oberflächenbeschichtung wasserdicht, insbesondere schlagregendicht, und/oder diffusionsoffen. Erfindungsgemäß bevorzugt eingesetzte Oberflächenbeschichtungen verhindern somit das Eindringen von flüssigem Wasser in das Dämmputzsystem, ermöglichen jedoch andererseits die Diffusion von Wasserdampf aus dem Mauerwerk in die Umgebung, wodurch das Mauerwerk konstant entfeuchtet wird.

Besonders gute Ergebnisse werden im Rahmen der vorliegenden Erfindung erhalten, wenn die Oberflächenbeschichtung eine Schichtdicke von 50 bis 400 µm, insbesondere 100 bis 300 µm, vorzugsweise 150 bis 250 µm, aufweist. Die Oberflächenbeschichtung kann dabei durch einmaliges oder wahlweise durch mehrmaliges Auftragen erzeugt werden, d. h. die Oberflächenbeschichtung kann im Rahmen der Erfindung aus mehreren Schichten bestehen, wobei jedoch die Gesamtdicke der Oberflächenbeschichtung vorzugsweise im oben angegebenen Rahmen liegt.

Als besonders geeignet haben sich Oberflächenbeschichtungen auf Polymerbasis, insbesondere auf Acrylatbasis, herausgestellt. Diese sind zwar durchlässig gegenüber Wasserdampf, dabei aber dennoch undurchlässig gegenüber flüssigem Wasser und besitzen eine ausgezeichnete Dehnfähigkeit von bis zu 150 %. Hierdurch wirken derartige Oberflächenbeschichtungen rissüberbrückend, d. h. dass bei eventuell in der Dämmung auftretenden Rissen die Oberflächenbeschichtung nicht zwangsläufig gleichfalls reißt und somit den Eintritt von Wasser in das Dämmsystem erlaubt, sondern vielmehr ihre schützende Funktion beibehält. Dies erhöht die Haltbarkeit des Dämmsystems bzw. des Dämmputzsystems beträchtlich. Besonders geeignete Acrylatdispersionen sind als wasserbasierte Dispersionen mit einem Feststoffanteil von bis 60 % erhältlich und weisen keine organischen Lösemittel auf. Derartige Acrylatdispersionen sind kommerziell erhältlich und dem Fachmann ohne Weiteres geläufig.

Weiterhin kann es im Rahmen der vorliegenden Erfindung vorgesehen sein, dass zwischen der Aerogel enthaltenden Dämmputzschicht und der Oberflächenbeschichtung mindestens eine Grundierungsschicht angeordnet ist. Die Grundierungsschicht kann gleichfalls aus einer oder mehreren Lagen bestehen und weist insbesondere eine Schichtdicke von 25 bis 100 µm, insbesondere 35 bis 75 µm, vorzugsweise 45 bis 60 µm, auf. Als Grundierung eignen sich prinzipiell sämtliche Grundierungen, welche eine verbesserte Haftung der Oberflächenbeschichtung an dem zu beschichtenden Material gewährleisten und darüber hinaus das überwiegend mineralbasierte Putzsystem verfestigen. Dem Fachmann sind derartige Grundierungssysteme bekannt und geläufig. Es ist allerdings bevorzugt, wenn die verwendete Grundierung gleichfalls diffusionsoffen ist, d. h. einer Entfeuchtung des Mauerwerks nicht entgegensteht.

Gemäß einer bevorzugten Ausführungsform der vorliegenden Erfindung ist zwischen der ein Aerogel enthaltenden Dämmputzschicht und der Grundierungsschicht bzw. der Oberflächenbeschichtung mindestens eine weitere, insbesondere kein Aerogel enthaltende Dämmputzschicht angeordnet. Hierbei ist es gleichfalls bevorzugt, wenn die weitere Dämmputzschicht auf der der mit dem Dämmputzsystem versehenen Fläche abgewandten Seite des ein Aerogel enthaltenden Dämmputzes angeordnet ist.

Die Verwendung eines weiteren Wärmedämmputzes steigert insbesondere die mechanische Belastbarkeit, wie beispielsweise die Druckfestigkeit des gesamten Dämmputzsystems und schützt insbesondere bei außenseitiger Anordnung weiterhin den Aerogel enthaltenden Dämmputz.

Falls das Dämmputzsystem eine weitere Dämmputzschicht enthält, so weist diese im Allgemeinen eine Schichtdicke im Bereich von 0,1 bis 2 cm, insbesondere 0,2 bis 1,5 cm, vorzugsweise 0,3 bis 1,0 cm, bevorzugt, 0,4 bis 0,7 cm, auf. Im Rahmen der vorliegenden Erfindung wird somit die weitere Dämmputzschicht, welche insbesondere kein Aerogel enthält, nur mit einer äußerst geringen Schichtdicke auf die Außenseite der ein Aerogel enthaltenden Dämmputzschicht aufgebracht, um letztere vor mechanischen Einflüssen zu schützen.

Darüber hinaus wird es im Rahmen der vorliegenden Erfindung bevorzugt, wenn die weitere Dämmputzschicht eine Wärmeleitfähigkeit im Bereich von 0,02 bis 0,12 W/(mK), insbesondere 0,03 bis 0,10 W/(mK), vorzugsweise 0,05 bis 0,09 W/(mK), bevorzugt 0,06 bis 0,08 W/(mK), aufweist.

Gleichfalls werden im Rahmen der vorliegenden Erfindung besonders gute Ergebnisse erhalten, wenn die weitere Dämmputzschicht eine Druckfestigkeit von 1,3 bis 4,0 N/mm², insbesondere 1,4 bis 3,5 N/mm², vorzugsweise 1,5 bis 3,2 N/mm², bevorzugt, 1,6 bis 3,0 N/mm², aufweist.

Im Allgemeinen weist die weitere Dämmputzschicht eine Wasserdampfdiffusionswiderstandszahl µ, bestimmt nach DIN EN ISO 12542, im Bereich von 3 bis 10, insbesondere 4 bis 8, vorzugsweise 5 bis 7, auf.

Weiterhin kann es vorgesehen sein, dass die weitere Dämmputzschicht eine Trockenrohdichte im Bereich von 200 bis 350 kg/m³, insbesondere 250 bis 325 kg/m³, vorzugsweise 290 bis 310 kg/m³, aufweist.

Durch die Verwendung der weiteren, insbesondere kein Aerogel enthaltenden Dämmputzschicht können die mechanischen Eigenschaften des Dämmputzsystems verbessert werden, wobei gleichzeitig aufgrund der geringen Schichtdicke der weiteren Dämmputzschicht die Wärmedämmfähigkeit sowie der Wasserdampfdiffusionswiderstand des Dämmputzsystems nur geringfügig beeinflusst werden.

Gemäß einer bevorzugten Ausführungsform der vorliegenden Erfindung enthält die weitere Dämmputzschicht einen Leichtzuschlag. Was die Menge des Leichtzuschlags in der weiteren Dämmputzschicht anbelangt, so kann diese in weiten Bereichen variieren. Besonders gute Ergebnisse werden jedoch erhalten, wenn die weitere Dämmputzschicht einen Leichtzuschlag in Mengen von 30 bis 90 Gew.-%, insbesondere 40 bis 85 Gew.-%, vorzugsweise 50 bis 80 Gew.-%, bezogen auf den weiteren Dämmputz bzw. eine entsprechende Baustofftrockenmischung, enthält.

Darüber hinaus enthält die weitere Dämmputzschicht im Allgemeinen mindestens ein Bindemittel. Im Rahmen der vorliegenden Erfindung wird es jedoch bevorzugt, wenn die weitere Dämmputzschicht mindestens ein kalkbasiertes Bindemittel, insbesondere hydraulischen Kalk, und mindestens ein zementbasiertes Bindemittel, insbesondere Weißzement, enthält. Dabei wird es erfindungsgemäß bevorzugt, wenn die weitere Dämmputzschicht das kalkbasierte Bindemittel in Mengen von 5 bis 60 Gew.-%, insbesondere 10 bis 40 Gew.-%, vorzugsweise 10 bis 30 Gew.-%, bezogen auf den weiteren Dämmputz bzw. eine entsprechende Baustofftrockenmischung, enthält und das zementbasiertes Bindemittel in Mengen von 1 bis 15 Gew.-%, insbesondere 2 bis 10 Gew.-%, vorzugsweise 3 bis 5 Gew.-%, bezogen auf den weiteren Dämmputz bzw. eine entsprechende Baustofftrockenmischung, enthält.

Der für die weitere Dämmputzschicht verwendete Leichtzuschlag besitzt insbesondere eine Kornrohdichte von höchstens 2,0 kg/dm³ und ist insbesondere ausgewählt aus der Gruppe von vulkanischem Gestein, Perlit, Vermiculit, Bims, Schaum- und Blähglas, Blähton, Blähschiefer, Styropor, Tuff, Blähglimmer, Lavakies, Lavasand, Schaumkunststoffen und deren Mischungen, vorzugsweise Perlit, insbesondere mit Korngrößen von höchstens 3 mm, insbesondere höchstens 2 mm.

Bei den vorgenannten Gewichtsverhältnissen lassen sich zum einen sehr gute Festigkeiten und ein sehr gutes und gleichmäßiges Abbinden der weiteren Dämmputzschicht beobachten. Darüber wird auch die Haftung an der ein Aerogel enthaltenden Dämmputzschicht erhöht, da bevorzugt jeweils ähnliche Bindemittelsysteme verwendet werden.

Wenn das Dämmputzsystem neben der ein Aerogel enthaltenden Dämmputzschicht eine weitere, insbesondere kein Aerogel enthaltende, Dämmputzschicht aufweist, so ist im Allgemeinen zwischen der ein Aerogel enthaltenden Dämmputzschicht und der weiteren Dämmputzschicht eine Trägerschicht angeordnet. Die Trägerschicht ist insbesondere in Form einer Armierung ausgebildet und ist vorzugsweise ein Glasfasergewebe bzw. ein Glasfasernetz. Die Verwendung einer Trägerschicht, insbesondere in Form einer Armierung, verleiht dem erfindungsgemäßen Dämmputzsystem zusätzlich weitere mechanische Belastbarkeit und vermeidet die Bildung von Rissen, da Spannungen ausgeglichen werden können. Eine Armierung erlaubt weiterhin, dass die beiden Dämmputzschichten unmittelbar miteinander in Kontakt stehen und so einen besonders innigen Verbund bilden können, wobei beide Dämmputzschichten an und in der Armierung verankert sind. Die Verwendung von Glasfasergeweben bzw. Glasfasernetzen ist besonders vorteilhaft, da diese sowohl alkaliresistent als auch nicht brennbar sind. Vorzugsweise werden Armierungen, insbesondere Glasfasergewebe, mit Maschenweiten bzw. einer Größe der Gitteröffnungen im Bereich von 16 mm² bis 400 mm², insbesondere 49 mm² bis 300 mm², vorzugsweise 100 mm² bis 200 mm², eingesetzt.

Ein erfindungsgemäß bevorzugtes Dämmputzsystem besitzt ausgehend von einer mit dem Dämmputzsystem versehenen Fläche, d. h. von Innen nach Außen, folgenden Aufbau:
Dämmputzschicht, enthaltend mindestens ein Aerogel,
Trägerschicht,
weitere Dämmputzschicht,
Grundierungsschicht und
Oberflächenbeschichtung.

Derartige Dämmputze vereinen sowohl eine hohe Wärmedämmfähigkeit als auch eine hohe mechanische Belastbarkeit.

Vorzugsweise weist das Dämmputzsystem im Rahmen der vorliegenden Erfindung eine Wasserdampfdiffusionswiderstandszahl µ, bestimmt nach DIN EN ISO 12542, im Bereich von 4 bis 12, insbesondere 5 bis 10, vorzugsweise 6 bis 8, auf.

Darüber hinaus wird es im Rahmen der vorliegenden Erfindung bevorzugt, wenn das Dämmputzsystem die Brennbarkeit A1 oder A2 gemäß DIN 4102 aufweist. Das erfindungsgemäße Dämmputzsystem ist somit nicht brennbar und genügt folglich den höchsten Brandschutzauflagen, weshalb es problemlos auch in sensiblen Bereichen verbaut werden kann.

Im Allgemeinen weist das Dämmputzsystem eine Schichtdicke von 1,5 bis 14 cm, insbesondere 2,5 bis 9 cm, vorzugsweise 3,5 bis 8 cm, auf.

Die vorgenannten Schichtdicken bzw. Dicken des Dämmputzsystems gelten jedoch nur, wenn das Dämmputzsystem direkt auf eine Gebäudewand, insbesondere ein Mauerwerk, aufgetragen wird. Wird das erfindungsgemäße Dämmputzsystem als Teil eines Wärmedämmverbundes (WDVS) eingesetzt, so kann es deutlich geringere Schichtdicken aufweisen. Das erfindungsgemäße Dämmputzsystem erlaubt somit eine effektive Wärmedämmung bei geringen Schichtdicken und einer hervorragenden mechanischen Belastbarkeit.

Für weitere Einzelheiten zu diesem Erfindungsaspekt kann auf die vorangehenden Ausführungen zu den übrigen Erfindungsaspekten verwiesen werden, welche in Bezug auf das erfindungsgemäße Dämmputzsystem entsprechend gelten.

Weiterer Gegenstand der vorliegenden Erfindung - gemäß einem **sechsten** Aspekt der vorliegenden Erfindung - ist ein Wärmedämmverbundsystem (WDVS), welches eine Wärmedämmplatte und ein zuvor beschriebenes Dämmputzsystem aufweist. Hierbei ist es insbesondere vorgesehen, dass an einer zu dämmenden Fläche die Wärmedämmplatte angeordnet ist und nachfolgend, d. h. an der Außenseite bzw. an der der zu dämmenden Fläche abgewandten Seite der Wärmedämmplatte, das Dämmputzsystem angeordnet ist.

Das erfindungsgemäße Wärmedämmverbundsystem zeichnet sich insbesondere dadurch aus, dass es nur eine äußerst geringe Dicke aufweist, diffusionsoffen für Wasserdampf ist und darüber hinaus mechanisch sehr belastbar ist, wobei trotz der geringen Schichtdicke im Vergleich zu herkömmlichen Wärmedämmverbundsystemen vergleichbare oder sogar verbesserte Dämmeigenschaften erreicht werden.

Im Allgemeinen weist das Wärmedämmverbundsystem eine Dicke von 4 bis 12 cm, insbesondere 5 bis 10 cm, vorzugsweise 5,5 bis 9 cm, bevorzugt 6 bis 8 cm, auf. Die Schichtdicke ist dabei von den Standortbedingungen, wie der Beschaffenheit des Mauerwerks sowie der Umgebung, abhängig.

Durch das erfindungsgemäße Wärmedämmverbundsystem kann somit im Vergleich zu üblichen Wärmedämmverbundsystemen, welche Schichtdicken im Bereich von 18 bis 20 cm aufweisen, eine effiziente Wärmedämmung mit einer um mehr als 2/3 verringerten Dicke der Wärmedämmverbundsysteme erreicht werden. Gemäß einer bevorzugten Ausführungsform der vorliegenden Erfindung weist das Wärmedämmverbundsystem eine Wasserdampfdiffusionswiderstandszahl µ, bestimmt nach DIN EN ISO 12542, im Bereich von 4 bis 12, insbesondere 5 bis 10, vorzugsweise 6 bis 8, auf.

Weiterhin ist es im Rahmen der vorliegenden Erfindung bevorzugt, wenn das Wärmedämmverbundsystem eine Wärmeleitfähigkeit im Bereich von 0,015 bis 0,045 W/(mK), insbesondere 0,017 bis 0,040 W/(mK), vorzugsweise 0,020 bis 0,035 W/(mK), bevorzugt 0,022 bis 0,027 W/(mK), aufweist.

Wie zuvor bereits ausgeführt, weist das erfindungsgemäße Dämmputzsystem als Bestandteil eines Wärmedämmverbundsystems andere Schichtdicken auf als bei alleiniger Anwendung. Was die Schichtdicke des Dämmputzsystems im Wärmedämmverbundsystem anbelangt, so kann diese in weiten Bereichen variieren. Besonders gute Ergebnisse werden jedoch erhalten, wenn das Dämmputzsystem eine Dicke von 0,5 bis 6 cm, insbesondere 1 bis 5 cm, vorzugsweise 1,5 bis 4 cm, bevorzugt 2 bis 3 cm, aufweist.

In diesem Zusammenhang kann es insbesondere vorgesehen sein, dass die Aerogel enthaltende Dämmputzschicht eine Schichtdicke im Bereich von 0,5 bis 4 cm, insbesondere 1 bis 3 cm, vorzugsweise 1,5 bis 3 cm, bevorzugt 1,5 bis 2,5 cm, aufweist.
Gleichfalls kann es vorgesehen sein, dass die weitere, insbesondere kein Aerogel enthaltende Dämmputzschicht eine Schichtdicke im Bereich von 0,1 bis 2 cm, insbesondere 0,2 bis 1,5 cm, vorzugsweise 0,3 bis 1,0 cm, bevorzugt 0,4 bis 0,7 cm, aufweist. Mit den vorgenannten Schichtdicken des Dämmputzsystems bzw. der Dämmputzschichten als Teil des erfindungsgemäßen Wärmedämmverbundsystems werden im Rahmen der vorliegenden Erfindung hervorragende Ergebnisse erhalten.
Gemäß einer bevorzugten Ausführungsform der vorliegenden Erfindung weist das Wärmedämmverbundsystem folgenden Schichtaufbau, ausgehend von der zu dämmenden Fläche nach Außen, auf:
Wärmdämmplatte,
Dämmputzschicht, enthaltend mindestens eine Aerogel,
Trägerschicht,
weitere Dämmputzschicht,
Grundierungsschicht und
Oberflächenbeschichtung.

Besonders gute Ergebnisse werden mit dem erfindungsgemäßen Wärmedämmverbundsystem erhalten, wenn eine spezifische, ein Aerogel enthaltende Wärmedämmplatte, wie nachfolgend beschrieben, als Teil des Wärmeverbundsystems verwendet wird.

Die bevorzugt verwendete Wärmedämmplatte, insbesondere zur Wärmedämmung von Bauwerken bzw. Gebäuden, zeichnet sich dadurch aus, dass die Wärmedämmplatte mindestens ein Aerogel enthält und entlang ihrer Hauptdämmrichtung diffusionsoffen ist. Die erfindungsgemäß bevorzugt eingesetzte Wärmedämmplatte erlaubt somit einen Transport von Wasserdampf vom Mauerwerk in die Umgebung. Die Hauptdämmrichtung der erfindungsgemäß bevorzugt eingesetzten Wärmedämmplatte verläuft folglich senkrecht zur Hauptfläche, d. h. der größten Fläche, der Wärmedämmplatte, welche synonym auch als Flachfläche bzw. Breitfläche bezeichnet wird. Das Aerogel ist in loser Schüttung in der Wärmedämmplatte angeordnet. Hierdurch kann ein besonders niedriger Wasserdampfdiffusionswiderstand erzielt werden, da kein Bindemittel die Wasserdampfdiffusion behindert.

Im Allgemeinen weist die Wärmedämmplatte ein Aerogel mit absoluten Partikelgrößen im Bereich von 1 bis 8 mm, insbesondere 2 bis 6 mm, vorzugsweise 3 bis 5 mm, auf. Die Verwendung von Aerogel mit den vorgenannten Partikelgrößen erlaubt einerseits eine besonders gute Wasserdampfdiffusion und ermöglicht gleichzeitig eine sehr effektive Dämmwirkung, wobei die Partikel robust genug sind, um Erschütterungen bei Lager und Transport, Zuschnitt und Montage der Wärmedämmplatte schadlos zu überstehen.

Was den Wasserdampfdiffusionswiderstand der eingesetzten Wärmedämmplatte anbelangt, so kann dieser in weiten Bereichen variieren. Es wird jedoch bevorzugt, wenn die Wärmedämmplatte eine Wasserdampfdiffusionswiderstandszahl µ, bestimmt nach DIN EN ISO 12542 im Bereich von 1 bis 8, insbesondere 1 bis 6, vorzugsweise 2 bis 5, aufweist.

Wärmedämmplatten aus Polymerschäumen weisen deutlich höhere Wasserdampfdiffusionswiderstandszahlen, bestimmt nach DIN EN ISO 12542, auf. So besitzen Polyurethan-Hartschäume und expandierter Polystyrolpartikelschaum µ-Werte im Bereich von 50 bis 80, während extrudierter Polystyrolpartikelschaum µ-Werte im Bereich von 80 bis 180 aufweist. Die Wärmedämmplatte weisen eine Wärmeleitfähigkeit im Bereich von 0,008 bis 0,040 W/(mK), insbesondere 0,010 bis 0,035 W/(mK), vorzugsweise 0,011 bis 0,030 W/(mK), bevorzugt 0,012 bis 0,020 W/(mK), auf. Die bevorzugt verwendete Wärmedämmplatte erreicht somit nahezu die äußerst niedrigen Wärmeleitfähigkeiten von reinem Aerogel. Die Wärmedämmplatte kann einen zumindest im Wesentlichen quaderförmigen Aufbau besitzen. Dies erleichtert sowohl Lagerung als auch Montage der Wärmedämmplatten.

Im Allgemeinen weist die eingesetzte Wärmedämmplatte eine Dicke im Bereich von 1 bis 8 cm, insbesondere 2 bis 7 cm, vorzugsweise 2,5 bis 6 cm, bevorzugt 3 bis 5 cm, auf. Die eingesetzte Wärmedämmplatte weist somit im Vergleich zu gängigen Wärmedämmplatten auf Basis von Polystyrol bzw. Polyurethan eine deutlich verringerte Dicke auf, wobei eine Reduzierung um den Faktor 3 bis 4 möglich ist. Es ist vorgesehen, dass die Wärmedämmplatte einen Grundkörper, bestehend aus den Schmalseiten der Wärmedämmplatte und einer Innenstruktur mit Zwischenräumen, insbesondere Kavitäten, aufweist. Der Grundkörper kann dabei einstückig oder auch mehrstückig ausgebildet sein.

Bevorzugt weist die Wärmedämmplatte parallel zur Hauptdämmrichtung eine Innenstruktur mit zumindest einseitig offenen Zwischenräumen, insbesondere Kavitäten, zur Aufnahme des Aerogels auf. Hierbei kann es vorgesehen sein, dass die Zwischenräume beidseitig offen sind und sich über die ganze Dicke der Wärmedämmplatte erstrecken. Durch die Innenstruktur mit den Kavitäten zur Aufnahme des Aerogels erhält einerseits die Wärmedämmplatte eine erhöhte mechanische Stabilität, andererseits wird die lose Schüttung des Aerogels in der erfindungsgemäß eingesetzten Wärmedämmplatte in kleinere Einheiten unterteilt, wodurch bei Transport und Montage, d. h. bei Erschütterung, weniger starke Kräfte auf die Aerogelpartikel einwirken und diese somit geschont werden. Die Zwischenräume sind bevorzugt n-eckig, insbesondere vier- bis achteckig, vorzugsweise sechseckig, ausgebildet. Durch die Innenstruktur werden somit bevorzugt wabenförmige Hohlräume in der Wärmedämmplatte geschaffen, welche vorzugsweise senkrecht zur Diffusionsrichtung bzw. zur Hauptwärmedämmrichtung vollständig geöffnet sind.

Besonders gute Ergebnisse werden dabei erhalten, wenn die Öffnungen der Zwischenräume Flächeninhalte parallel zur Hauptfläche im Bereich von 1 bis 64 cm², insbesondere 3 bis 36 cm², vorzugsweise 4 bis 16 cm², aufweisen. Bevorzugt wird somit durch die Innenkonstruktion ein Raster innerhalb der Wärmedämmplatte gebildet, insbesondere durch Stege. Diese Rasterung der Wärmedämmplatte schützt einerseits - wie oben bereits erwähnt - das Aerogel, ermöglicht jedoch andererseits eine einfache Konfektionierung der Wärmedämmplatte auf der Baustelle bzw. eine Anpassung der Ausmaße der Wärmedämmplatte an Größe und Form der zu dämmenden Fläche.

Im Allgemeinen weist der Grundkörper der Wärmedämmplatte Holz, Kunststoffe bzw. mineralische Materialien auf oder besteht zumindest im Wesentlichen hieraus. Eine Vielzahl thermoplastischer oder duroplastischer Kunststoffe sind geeignet, den Grundkörper der erfindungsgemäß eingesetzten Wärmedämmplatte zu bilden, insbesondere Kunststoffe auf Basis von (i) Polyolefin, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDV) oder Polyvinylidenchlorid (PVDC); (vi) Acrylnitril/Butadien/Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen können zum Einsatz kommen. Es ist jedoch bevorzugt, wenn der Grundkörper der Wärmedämmplatte aus mineralischen Materialien besteht, da in diesem Fall die Wärmedämmplatte die Brennbarkeit A1 oder A2 nach DIN 4102 aufweist. Gemäß einer weiteren bevorzugten Ausführungsform besteht der Grundkörper der Wärmedämmplatte zumindest im Wesentlichen aus Holz; dies hat den Vorteil, dass bei relativ geringem Gewicht eine hohe Stabilität erzielt wird und darüber hinaus eine nochmals verbesserte Durchlässigkeit für Gase, insbesondere Wasserdampf, erreicht wird.

Im Allgemeinen sind die Öffnungen der Zwischenräume, insbesondere durch einen Rieselschutz, zumindest teilweise verschlossen. In diesem Zusammenhang kann es insbesondere vorgesehen sein, dass auf den Breitflächen der Wärmedämmplatte ein diffusionsoffenes, insbesondere ein strömungsoffenes, Flächengebilde angeordnet ist, wobei es bevorzugt ist, wenn das Flächengebilde die Breitflächen der Wärmedämmplatte bedeckt. Eine zumindest teilweise oder bereichsweise Verschließung der Öffnung der Zwischenräume mit einem Rieselschutz, insbesondere mit einem Flächengebilde, verhindert zum einen ein unerwünschtes Herausfallen des Aerogels aus den Zwischenräumen der Wärmedämmplatte. Zum anderen sorgt eine nur bereichsweise Abdeckung der Öffnung für eine ungehinderte Diffusion von Wasserdampf durch die Wärmedämmplatte hindurch. Bevorzugt bedeckt das Flächengebilde die Breitfläche der Wärmedämmplatte vollflächig. Es wird bevorzugt, wenn das Flächengebilde ein textiles oder mineralisches, vorzugsweise ein mineralisches, Flächengebilde, insbesondere ein Gewebe, Gewirke, Gestricke, Geflecht, Nähgewirke, Vlies und/oder ein Filz, oder ein Gitter ist. In diesem Zusammenhang wird es bevorzugt, wenn das Flächengebilde ein Gewebe mit einer Maschenweite oder einem Gitterabstand von 0,5 bis 5 mm, insbesondere 1 bis 4 mm, vorzugsweise 1,5 bis 3 mm, bevorzugt 1,7 bis 2,5 mm, ist, wobei bevorzugt ein Glasfasergewebe verwendet wird.

Die zuvor genannten Flächengebilde sind allesamt diffusionsoffen bzw. strömungsoffen und erlauben einen ungehinderten Durchtritt von Wasserdampf. Darüber hinaus dient die Verwendung eines Flächengebildes, insbesondere eines Glasfasergewebes, mit den oben genannten Maschenweiten nicht nur als Rieselschutz gegen ein unbeabsichtigtes Herausfallen des Aerogels aus den Zwischenräumen der Wärmedämmplatte, sondern ist vielmehr gleichfalls auch eine Armierung für eine auf die Wärmedämmplatte aufgetragene Beschichtung bzw. einen auf die Wärmedämmplatte aufgetragenen Putz, insbesondere einen Wärmedämmputz, wobei insbesondere bei Verwendung eines Putzes dieser zwar an dem Flächengebilde verankert werden kann, jedoch nicht in die Platte eindringt. Hierdurch verleiht die eingesetzte Wärmedämmplatte einem Wärmedämmverbundsystem, in welches sie integriert ist, eine gesteigerte mechanische Beständigkeit. Die Wärmedämmplatte wird im Allgemeinen mittels eines Klebstoffs, insbesondere mittels eines 2-Komponenten-Klebstoffs, vorzugsweise auf Methylmethacrylat-Basis bzw. Polyurethan-Basis, an der zu dämmenden Fläche angebracht. Die Verwendung von Klebstoffen hat gegenüber dem Einsatz von Dämmstoffdübeln den Vorteil, dass die Wärmedämmplatte und folglich auch ein Wärmedämmverbundsystem, in welches sie integriert ist, nicht beschädigt wird und darüber hinaus die Entstehung einer Kältebrücke durch den Dämmstoffdübel verhindert wird.

Für weitere Aspekte zu diesem Erfindungsaspekt kann auf die vorangehenden Ausführungen zu den übrigen Erfindungsaspekten verwiesen werden, welche in Bezug auf das erfindungsgemäße Wärmedämmstoffverbundsystem entsprechend gelten.

Schließlich ist weiterer Gegenstand der vorliegenden Erfindung - gemäß einem **siebten** Aspekt der vorliegenden Erfindung - eine Dämmputzplatte, welche aus einem wie zuvor beschriebenen mindestens ein Aerogel enthaltenden Dämmputz bzw. einem wie zuvor beschriebenen Dämmputzsystem besteht.

Die erfindungsgemäße Dämmputzplatte eignet sich in besonderer Weise für den Innenausbau, insbesondere für den Dachausbau, speziell für die Unter- und Zwischensparrendämmungen.

Bei der Verwendung im Innenbereich werden üblicherweise andere Grundierungen und Beschichtungen verwendet als im Bereich der Außendämmung. Dies ist jedoch dem Fachmann geläufig, so dass es hierzu keiner weiteren Ausführungen bedarf.

Was die Dicke der erfindungsgemäßen Dämmputzplatte anbelangt, so kann diese in weiten Bereichen variieren. Besonders gute Ergebnisse werden im Rahmen der vorliegenden Erfindung jedoch erhalten, wenn die Dämmputzplatte eine Dicke im Bereich von 1 bis 6 cm, insbesondere 1,5 bis 5,5 cm, vorzugsweise 1,5 bis 5 cm, bevorzugt 2 bis 4 cm, aufweist.

Für weitere Einzelheiten zu diesem Erfindungsaspekt kann auf die vorangehenden Ausführungen zu den übrigen Erfindungsaspekten verwiesen werden, welche in Bezug auf die erfindungsgemäße Dämmputzplatte entsprechend gelten.

Weitere Vorteile, Eigenschaften, Aspekte und Merkmale der vorliegenden Erfindung ergeben sich aus der folgenden Beschreibung von in der Zeichnung dargestellten, erfindungsgemäß bevorzugten Ausführungsform.

In den Figurendarstellungen zeigt:
- Fig. 1: eine schematische Darstellung der erfindungsgemäßen Dämmputzschicht 1, welche auf eine Gebäudewand 2 aufgebracht ist;
- Fig. 2: eine schematische Darstellung des erfindungsgemäßen Dämmputzsystems 3, welches an einer Gebäudewand 2 angebracht ist;
- Fig. 3: eine schematische Darstellung eines erfindungsgemäßen Wärmedämmverbundsystems 8, welches an einer Gebäudewand 2 angebracht ist;
- Fig. 4: den schematischen Aufbau einer erfindungsgemäß bevorzugt eingesetzten Wärmedämmplatte 9.

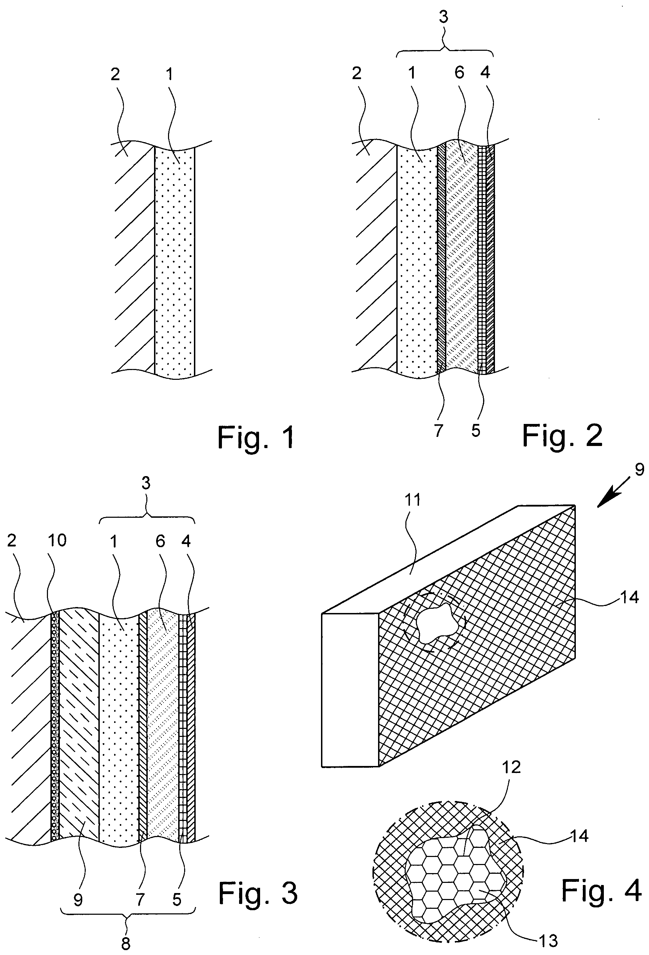

Insbesondere zeigt Fig. 1 eine Darstellung einer erfindungsgemäßen Dämmputzschicht 1, welche auf eine zu dämmende Wand eines Gebäudes 2 aufgebracht ist. Hier kann es abweichend von der Figurendarstellung insbesondere vorgesehen sein, dass die Hauswand vor Auftrag der erfindungsgemäßen Dämmputzschicht 1 vorbehandelt wurde, insbesondere mit einer Grundierung vorbehandelt wurde.

Insbesondere zeigt Fig. 2 eine bevorzugte Ausführungsform des erfindungsgemäßen Dämmputzsystems 3, welches an einer Hauswand angebracht ist. Das erfindungsgemäße Dämmputzsystem 3 weist insbesondere eine mindestens ein Aerogel enthaltende Dämmputzschicht 1 sowie eine Oberflächenbeschichtung 4, welche schlagregenfest und diffusionsoffen ist, auf. Zwischen der Oberflächenbeschichtung 4 und der Dämmputzschicht 1 ist eine Grundierungsschicht 5 vorgesehen, welche für eine gute Haftung zwischen der Oberflächenbeschichtung 4 und den darunterliegenden Schichten des Dämmputzsystems 3 sorgt. Zwischen der Grundierungsschicht 5 und der Dämmputzschicht 1 ist eine weitere Dämmputzschicht 6, welche kein Aerogel enthält, angeordnet und zwischen den Dämmputzschichten 1 und 6 befindet sich eine Trägerschicht 7, welche vorzugsweise aus einem Glasfasergewebe mit einer Maschenweite von 13 x 13 mm besteht. Das erfindungsgemäße Dämmputzsystem 3 ist diffusionsoffen und schlagregenfest ausgebildet.

Fig. 3 zeigt insbesondere eine schematische Darstellung eines erfindungsgemäß bevorzugten Wärmedämmverbundsystems 8, welches aus einem Dämmputzsystem 3 und einer Dämmputzplatte 9 besteht. Die Dämmputzplatte 9 ist mittels eines 2-Komponenten-Klebers 10 an der Hauswand 2 befestigt. Unmittelbar auf die Wärmedämmplatte 9 in Richtung der Hauptdämmrichtung, d. h. auf die Hauptfläche bzw. Breitfläche der Wärmedämmplatte 9 aufgebracht ist das erfindungsgemäße Dämmputzsystem 3, wobei die mindestens ein Aerogel enthaltende Dämmputzschicht 1 unmittelbar an die Dämmputzplatte 9 angrenzt. Auf die Dämmputzschicht 1 folgt eine Trägerschicht 7 sowie eine weitere, kein Aerogel enthaltende Dämmputzschicht 6. Außenseitig an der Dämmputzschicht 6 angebracht befindet sich eine Grundierungsschicht 5 auf die abschließend die Oberflächenbeschichtung 4 aufgebracht ist. Das erfindungsgemäße Wärmeverbundsystem ist in Hauptdämmrichtung, d. h. senkrecht zu der Hauswand 2, diffusionsoffen ausgestaltet und schlagregenfest.

Insbesondere zeigt Fig. 4 eine erfindungsgemäß bevorzugte Ausführungsform der erfindungsgemäß eingesetzten Wärmedämmplatte 9. Die Wärmedämmplatte 9 besitzt einen Grundkörper, welcher aus den Schmalseiten 11 der Wärmedämmplatte sowie einer Innenstruktur 12 gebildet wird. Die Innenstruktur 12 bildet sechseckige, insbesondere wabenförmige Hohlräume 13 aus, welche sich gleichförmig über die gesamte Dicke der Wärmedämmplatte 9 erstrecken und ein Aerogel enthalten. Die Hauptflächen bzw. Breitflächen der Wärmedämmplatte 9 sind mit einem Flächengebilde 14, insbesondere mit einem Glasfasergewebe, welches eine Maschenweite von 2 x 2 mm aufweist, bedeckt, insbesondere sind die Breitflächen der Wärmedämmplatte 9 mit einem Flächengebilde bedeckt. Das Glasfasergewebe dient einerseits als Rieselschutz gegen ein unbeabsichtigtes Herausfallen des Aerogels aus den Zwischenräumen 12 der Wärmedämmplatte 9 und andererseits als Verankerung bzw. Armierung von Putzschichten, wobei die Putze nicht in das Innere der Platte, zumindest nicht wesentlich ins Innere der Platte eindringen.

### Ausführungsbeispiele

### 1. Verfahren zur Herstellung des Aerogels

Das im Rahmen der vorliegenden Erfindung eingesetzte Aerogel wird in einem mehrstufigen Verfahren, umfassend die folgenden Verfahrensschritte, hergestellt:
1. Herstellung des Hydrosols
Eine kommerzielle Natrium-Silikat-Lösung wird mit deionisiertem Wasser verdünnt und anschließend durch ein stark saures Kationenaustauscherharz auf Basis von sulfoniertem und divinylbenzolvernetztem Polystyrol geleitet. Als Reaktionsprodukt wird ein Hydrosol erhalten, bei welchem die Natriumionen des Silikats fast vollständig durch Protonen ersetzt sind. Die Vollständigkeit der Ionenaustauschreaktion wird durch Leitfähigkeitsmessung überprüft.
2. Herstellung eines Hydrogels
Das in Verfahrensschritt 1 erhaltene Hydrosol wird auf 50°C erwärmt und unter ständigem Rühren mit N,N-Dimethylformamid versetzt. Zur Beschleunigung der einsetzenden Kondensationsreaktion wird dem Gemisch 6 molare wässrige Ammoniaklösung zugegeben, bis die Lösung einen schwach sauren pH-Wert im Bereich von 4,2 bis 4,9 erreicht. Das Hydrosol wird zur Bildung des Gels mehrere Stunden bei konstanter Temperatur altern gelassen. Anschließend wird durch Zugabe von deionisiertem Wasser bei gleichbleibender konstanter Temperatur und Rühren das entstandene Hydrogel auf Partikelgrößen im Bereich von 0,5 bis 1 cm zerkleinert. Die das Hydrogel enthaltende Mischung wird auf 35°C abgekühlt und erneut für mehrere Stunden altern gelassen.
3. Herstellung des Alkogels
Das in Verfahrensschritt 3 erhaltene Hydrogel wird mit Methanol versetzt, bis die Volumenverhältnisse von Wasser und Methanol in etwa gleich sind. Anschließend ruht das Gel für mehrere Stunden. Nachfolgend wird aus der Reaktionsmischung ein Großteil des Lösemittels durch Filtration abgetrennt. Der verbleibende Rückstand wird anschließend wieder mit Methanol versetzt. Es vollzieht sich ein langsamer Lösemittelaustausch, bei welchem Wasser durch Methanol ersetzt wird. Die Abtrennung des Lösemittelgemisches und die Zugabe von Methanol werden gegebenenfalls wiederholt. Es entsteht ein Alkogel, welches für mehrere Stunden bei konstanter Temperatur reift.
Das abgetrennte Lösemittelgemisch wird in eine Destillationsapparatur überführt und destillativ getrennt.
4. Oberflächenmodifizierung
Das in Verfahrensschritt 3 erhaltene Alkogel wird bei konstanter Temperatur unter Rühren mit einer Lösung aus Hexamethyldisilazan und in n-Hexan versetzt, wobei Salpetersäure als Katalysator verwendet wird. Nach 20 Stunden Reaktionszeit ist die Oberflächenreaktion weitgehend abgeschlossen.
5. Lösemittelaustausch
Das in Verfahrensschritt 4 erhaltene Reaktionsgemisch wird durch Filtration von einem Großteil des Lösemittels getrennt und der verbleibende Rückstand mit n-Hexan versetzt. Der Schritt wird gegebenenfalls mehrfach wiederholt. Auf diese Weise wird das Methanol weitgehend durch n-Hexan ersetzt.
Das abgetrennte Lösemittelgemisch wird in eine Destillationsapparatur überführt und destillativ getrennt.
6. Trocknung
Das verbleibende Lösemittel - hauptsächlich n-Hexan - wird durch Destillation entfernt und das noch mit Lösemittelresten benetzte Alkogelgranulat wird aus dem Reaktionsbehälter und unter Vakuum bei 50°C unter vorsichtigem Rühren und Schütteln mehrere Stunden getrocknet.
Auf diese Weise wird ein Silica-Aerogel mit folgenden Eigenschaften erhalten:

| | |
|---|---|
| Partikelgröße: | 0,5 bis 5 mm, |
| Dichte: | 0,18 bis 0,20 g/cm³, |
| Kontaktwinkel: | 110 bis 150°, |
| Wärmeleitfähigkeit: | 0,024 bis 0,026 W/(mK), |
| Porendurchmesser: | 100 bis 300 nm, |
| Lichtdurchlässigkeit: | keine |

Das erhaltene Aerogel wird durch Sieben in die gewünschten Größenfraktionen unterteilt.

### 2. Herstellung eines Aerogel enthaltenen Wärmedämmputzes

Ein Putzmörtel, bestehend aus
Hydraulischem Kalk (21 Gewichtsteile),
Weißzement (3 Gewichtsteile),
Perlit (55 Gewichtsteile),
Aerogel mit einer Partikelgröße im Bereich von 0,5 bis 3 mm (20 Gewichtsteile) sowie Additiven (1 Gewichtsteil),
mit einer Schüttdichte von 250 kg/m³ wird durch Anmachen mit Wasser zu einem Dämmputz verarbeitet.

50 Liter des Putzmörtels werden mit 15 Liter Wasser angemacht, wobei 40 Liter Frischmörtel erhalten werden.

Der Aerogel enthaltende Wärmedämmputz weist eine Wärmeleitfähigkeit von 0,034 W/(mK) auf. Der Wasseraufnahmekoeffizient w liegt bei 1,24 kg/(m² •·h^{0,5}), d. h. der Putz ist wasserhemmend.

### 3. Herstellung eines Wärmedämmverbundsystems

### a) Herstellung einer Wärmedämmplatte

Eine plattenförmige 1 m x 0,5 m große Holzkonstruktion mit einer wabenförmigen Innenkonstruktion, welche über eine Wabenweite von 2 x 2 cm verfügt, wird einseitig mittels eines Glasfasergewebes mit einer Maschenweite von 2 x 2 mm durch Verkleben verschlossen. Die Waben der Innenkonstruktion werden mit einem grobkörnigen Aerogel mit Partikelgrößen im Bereich von 3 bis 5 mm gefüllt und auch die zweite Fläche der Grundkonstruktion wird mit einem Glasfasergewebe mit 2 x 2 mm Wabenweite durch Verkleben verschlossen.

### b) Anbringung eines Wärmedämmverbundsystems

Insgesamt 9 Wärmedämmplatten werden in einer Anordnung von 3 x 3 Wärmedämmplatten, d. h. je drei Wärmedämmplatten übereinander und drei Wärmedämmplatten nebeneinander, an einer Wand mittels eines 2-Komponenten-Polyurethan-Klebstoffs angebracht. Die Verklebung erfolgt punktförmig. Die Dicke der Wärmedämmplatte beträgt 5 cm. Anschließend wird eine 2 cm dicke Schicht des unter 2. hergestellten ein Aerogel enthaltenden Dämmputzes aufgetragen und anschließend mit einer Glasfaserarmierung aus einem Glasfasergewebe mit einer Maschenweite von 10 x 10 mm versehen. Nach Trocknung der Wärmedämmputzschicht wird eine weitere Wärmedämmputzschicht, welche kein Aerogel enthält, mit einer Schichtdicke von 0,5 cm aufgetragen. Bei dem weiteren Wärmedämmputz handelt es sich um einen rein mineralischen Putz auf Basis von Perlit, welcher aus einem Putzmörtel, enthaltend 50 bis 80 Vol.-% Perlit, 10 bis 30 Vol.-% Kalk, 3 bis 5 Vol.-% Zement und 0,1 Vol.-% Cellulose durch Anmachen mit Wasser erhalten wird.

Nach Trocknung der weiteren Wärmedämmputzschicht wird die Oberfläche des Wärmedämmverbundsystems mit einer Grundierung versehen. Abschließend wird eine Oberflächenbeschichtung auf Acrylatbasis in Form einer wässrigen Acrylatdispersion mit einer Trockenschichtdicke von 200 bis 300 µm aufgetragen. Die Oberflächenbeschichtung ist wasserabweisend und schlagregendicht sowie diffusionsoffen.

### 4. Herstellung einer Wärmedämmputzplatte

Der unter 2.) hergestellte Wärmedämmputz wird zu einer 35 bis 37mm dicken Platte gegossen. Die ausgehärtete Wärmedämmputzplatte besitzt eine Trockenrohdichte von 0,25 g/cm³ und eine Wärmeleitfähigkeit von 0,034 W/(mK). Die Druckfestigkeit beträgt 0,6 N/mm².

Der Wasseraufnahmekoeffizient w beträgt 1,24 kg/(m² •·h^{0,5}) und der Wasserdampfdiffusionswiderstand µ beträgt 6,1. Die erfindungsgemäße Wärmedämmputzplatte ist somit wasserdampfdiffusionsoffen und bereits ohne weitere Behandlung wasserhemmend.

Die Wärmedämmputzplatte lässt sich problemlos lagern und transportieren, d. h. sie ist stabil genug, um den beim Transport auftretenden mechanischen Belastungen standzuhalten. Darüber hinaus lässt sich die erfindungsgemäße Wärmedämmputzplatte in hervorragender Weise zurechtschneiden und konfektionieren, weshalb sie sich besonders für den Innenausbau eignet.

**Bezugszeichenliste:**

| | | | |
|---|---|---|---|
| 1 | Dämmputzschicht, enthaltend Aeorgel | 9 | Wärmedämmplatte |
| | | 10 | Klebstoff |
| 2 | Gebäudewand | 11 | Schmalflächen der Wärmedämmplatte |
| 3 | Dämmputzsystem | | |
| 4 | Oberflächenbeschichtung | 12 | Innenstruktur der Wärmedämmplatte |
| 5 | Grundierungsschicht | | |
| 6 | weitere Dämmputzschicht | 13 | Zwischenräume |
| 7 | Trägerschicht | 14 | Flächengebilde |
| 8 | Wärmedämmverbundsystem | | |

## Patentansprüche

1. Baustofftrockenmischung zur Herstellung eines Dämmputzes,
**dadurch gekennzeichnet,**
**dass** die Baustofftrockenmischung
(A) ein Aerogel in Mengen von 5 bis 35 Gew.-%, bezogen auf die Baustofftrockenmischung,
(B) mindestens einen Leichtzuschlag, insbesondere Perlit, in Mengen von 40 bis 75 Gew.-%, bezogen auf die Baustofftrockenmischung,
(C) mindestens ein kalkbasiertes Bindemittel, insbesondere hydraulischen Kalk, in Mengen von 8 bis 40 Gew.-%, bezogen auf die Baustofftrockenmischung,
(D) mindestens ein zementbasiertes Bindemittel, insbesondere Weißzement, in Mengen von 1,5 bis 10 Gew.-%, bezogen auf die Baustofftrockenmischung, und
(E) mindestens ein Additiv in Mengen von 0,1 bis 5 Gew.-%, bezogen auf die Baustofftrockenmischung, enthält,
wobei die Baustofftrockenmischung das Aerogel und den Leichtzuschlag in einem gewichtsbasierten Verhältnis von Aerogel zu Leichtzuschlag von 1 : 1 bis 1 : 13 enthält und wobei die Baustofftrockenmischung das kalkbasierte Bindemittel und das zementbasierte Bindemittel in einem gewichtbasierten Verhältnis von kalkbasiertem Bindemittel zu zementbasiertem Bindemittel von 1 : 1 bis 15 : 1 enthält.

2. Baustofftrockenmischung nach Anspruch 1, **dadurch gekennzeichnet,**
**dass** die Baustofftrockenmischung das Aerogel in Mengen von 10 bis 30 Gew.-%, ganz besonders bevorzugt 15 bis 25 Gew.-%, bezogen auf die Baustofftrockenmischung, enthält und/oder
**dass** das Aerogel eine Partikelgröße von 0,01 bis 10 mm, insbesondere 0,05 bis 8 mm, vorzugsweise 0,1 bis 7 mm, bevorzugt 0,2 bis 6 mm, besonders bevorzugt 0,5 bis 5 mm, ganz besonderes bevorzugt 0,5 bis 4 mm, äußerst bevorzugt 0,5 bis 2 mm, aufweist.

3. Baustofftrockenmischung nach Anspruch 1 oder 2, **dadurch gekennzeichnet, dass** die Baustofftrockenmischung außerdem mindestens einen Zuschlag enthält, insbesondere ausgewählt aus natürlichen oder künstlichen Gesteinen, Metallen oder Gläsern, insbesondere wobei der Zuschlag ein Leichtzuschlag, insbesondere mit einer Kornrohdichte von höchstens 2,0 kg/dm³, ist, insbesondere ausgewählt aus der Gruppe von vulkanischem Gestein, Perlit, Vermiculit, Bims, Schaum- und Blähglas, Blähton, Blähschiefer, Styropor, Tuff, Blähglimmer, Lavakies, Lavasand, Schaumkunststoffen und deren Mischungen, vorzugsweise Perlit.

4. Verwendung einer Baustofftrockenmischung, insbesondere eines Putzmörtels, nach einem der vorangehenden Ansprüche zur Herstellung eines Dämmputzes, insbesondere eines Wärmedämmputzes, zur Wärmedämmung von Bauwerken, insbesondere von Gebäuden.

5. Dämmputz, insbesondere Wärmedämmputz, zur Wärmedämmung von Bauwerken, erhältlich aus einer Baustofftrockenmischung nach einem der Ansprüche 1 bis 3, wobei der Dämmputz durch Anmachen mit Wasser der Baustofftrockenmischung in Mengen von 70 bis 150 Gew, bezogen auf die Baustofftrockenmischung, erhältlich ist und wobei der ausgehärtete Dämmputz eine Druckfestigkeit von 0,4 bis 2,5 N/mm² aufweist.

6. Dämmputz nach Anspruch 5, **dadurch gekennzeichnet,**
**dass** der ausgehärtete Dämmputz eine Wärmeleitfähigkeit im Bereich von 0,02 bis 0,055 W/(mK), insbesondere 0,022 bis 0,050 W/(mK), vorzugsweise 0,024 bis 0,045 W/(mK), bevorzugt 0,026 bis 0,040 W/(mK), besonders bevorzugt 0,028 bis 0,032 W/(mK), aufweist, und/oder
**dass** der ausgehärtete Dämmputz eine Wasserdampfdiffusionswiderstandszahl µ, bestimmt nach DIN EN ISO 12542, im Bereich von 2 bis 9, insbesondere 3 bis 7, vorzugsweise 4 bis 6, aufweist.

7. Mehrschichtiges Dämmputzsystem (3), aufweisend mindestens eine Dämmputzschicht (1), bestehend aus einem Dämmputz nach Anspruch 5 oder 6, und einer Oberflächenbeschichtung (4), wobei die Beschichtung zumindest an einer der mit dem Dämmputzsystem (3) versehenen Fläche (2), insbesondere einer Gebäudewand, abgewandten Seite der Dämmputzschicht (1) angeordnet ist, vorzugweise diese zumindest im Wesentlichen bedeckt.

8. Dämmputzsystem (3) nach Anspruch 7, **gekennzeichnet durch** folgenden Schichtaufbau, ausgehend von einer mit dem Dämmputzsystem (3) versehenen Fläche (2):
Dämmputzschicht (1),
Trägerschicht (7),
weitere Dämmputzschicht (6),
Grundierungsschicht (5) und
Oberflächenbeschichtung (4).

9. Dämmputzsystem (3) nach Anspruch 7 oder 8, **dadurch gekennzeichnet, dass** das Dämmputzsystem (3) eine Schichtdicke von 1,5 bis 14 cm, insbesondere 1,5 bis 10 cm, vorzugsweise 2,5 bis 9 cm, bevorzugt 3,5 bis 8 cm, aufweist.

10. Wärmedämmverbundsystem (8), aufweisend eine Wärmedämmplatte (9) und ein Dämmputzsystem (3) nach einem der Ansprüche 7 bis 9, insbesondere wobei an einer zu dämmenden Fläche (2) zunächst die Wärmedämmplatte (9) angeordnet ist und nachfolgend das Dämmputzsystem (3),
insbesondere wobei das Wärmedämmverbundsystem (8) eine Dicke von 4 bis 12 cm, insbesondere 5 bis 10, vorzugsweise 5,5 bis 9 cm, bevorzugt 6 bis 8 cm, aufweist und/oder
insbesondere wobei das Wärmedämmverbundsystem (8) eine Wärmeleitfähigkeit im Bereich von 0,015 bis 0,045 W/(mK), insbesondere 0,017 bis 0,040 W/(mK), vorzugsweise 0,020 bis 0,035 W/(mK), bevorzugt 0,022 bis 0,027 W/(mK), aufweist.

11. Wärmedämmverbundsystem (8) nach Anspruch 10, **gekennzeichnet durch** folgenden Schichtaufbau:
Wärmedämmplatte (9),
Dämmputzschicht (1),
Trägerschicht (7),
weitere Dämmputzschicht (6),
Grundierungsschicht (5) und
Oberflächenbeschichtung (4).

12. Dämmputzplatte, bestehend aus einem Dämmputz nach einem der Ansprüche 5 oder 6 oder einem Dämmputzsystem nach Ansprüche 7 bis 9.

## Claims

1. A dry building material mixture for producing an insulation plaster,
**characterised in that**
the dry building material mixture contains
(A) an aerogel in amounts of 5 to 35 wt.% with respect to the dry building material mixture,
(B) at least one lightweight aggregate, in particular perlite, in amounts of 40 to 75 wt.% with respect to the dry building material mixture,
(C) at least one lime-based binder, in particular hydraulic lime, in amounts of 8 to 40 wt.% with respect to the dry building material mixture,
(D) at least one cement-based binder, in particular white cement, in amounts of 1.5 to 10 wt.%, with respect to the dry building material mixture, and
(E) at least one additive in amounts of 0.1 to 5 wt.% with respect to the dry building material mixture,
wherein the dry building material mixture contains the aerogel and the light aggregate in a weight-based ratio of aerogel to lightweight aggregate of 1:1 to 1:13, and
wherein the dry building material mixture contains the lime-based binder and the cement-based binder in a weight-based ratio of lime-based binder to cement-based binder of from 1:1 to 15:1.

2. The dry building material mixture according to claim 1, **characterised in that**
the dry building material mixture contains aerogel in amounts of 10 to 30 wt.%, more preferably 15 to 25 wt.%, with respect to the dry building material mixture, and/or
the aerogel has a particle size of 0.01 to 10 mm, in particular 0.05 to 8 mm, preferably 0.1 to 7 mm, preferably 0.2 to 6 mm, particularly preferably 0.5 to 5 mm, more preferably 0.5 to 4 mm, most preferably 0.5 to 2 mm.

3. The dry building material mixture according to claim 1 or 2, **characterised in that** the dry building material mixture further contains at least one aggregate, in particular selected from natural or artificial rocks, metals or glasses, in particular wherein the aggregate is a lightweight aggregate, in particular having a grain bulk density of 2.0 kg/dm³ at the most, in particular selected from the group of volcanic rock, perlite, vermiculite, pumice, foam glass and expanded glass, expanded clay, expanded slate, styrofoam, tuff, expanded mica, lava gravel, lava sand, foam plastics, and mixtures thereof, preferably perlite.

4. The use of a dry building material mixture, in particular a plaster mortar, according to any one of the preceding claims for producing an insulation plaster, in particular a thermal insulation plaster, for the thermal insulation of building structures, in particular of buildings.

5. The insulation plaster, in particular thermal insulation plaster, for the thermal insulation of building structures, obtainable from a dry building material mixture according to any one of claims 1 to 3, wherein the insulation plaster is obtainable by mixing water with the dry building material mixture in amounts of 70 to 150 wt.% with respect to the dry building material mixture, and wherein the cured insulation plaster has a compressive strength of 0.4 to 2.5 n/mm².

6. The insulation plaster, according to claim 5,
**characterised in that**
the cured insulation plaster has a thermal conductivity in the range from 0.02 to 0.055 W/(mK), in particular 0.022 to 0.050 W/(mK), preferably 0.024 to 0.045 W/(mK), preferably 0.026 to 0.040 W/(mK), particularly preferably 0.028 to 0.032 W/(mK), and/or
that the cured insulation plaster has a water vapour diffusion resistance factor µ, determined according to DIN EN ISO 12542, in the range of 2 to 9, in particular 3 to 7, preferably 4 to 6.

7. The multi-layer insulation plaster system (3), comprising at least one insulation plaster layer (1), consisting of an insulation plaster according to claim 5 or 6 and a surface coating (4), wherein the coating is arranged at least on, preferably at least substantially covers, a side, in particular a building wall, of the insulation plaster layer (1), said side facing away from the surface (2) provided with the insulation plaster system (3).

8. The insulation plaster system (3) according to claim 7, **characterised by** the following layer structure, on the basis of a surface (2) provided with the insulation plaster system (3):
an insulation plaster layer (1),
a carrier layer (7),
a further insulation plaster layer (6),
a primer layer (5) and
a surface coating (4).

9. An insulation plaster system (3) according to claim 7 or 8, **characterized in that** the insulation plaster system (3) has a layer thickness of 1.5 to 14 cm, in particular 1.5 to 10 cm, preferably 2.5 to 9 cm, preferably 3.5 to 8 cm.

10. The composite thermal insulation system (8), comprising a thermal insulation board (9) and an insulation plaster system (3) according to any one of claims 7 to 9, in particular wherein
firstly the thermal insulation board (9), and then the insulation plaster system (3), is arranged on a surface (2) to be insulated,
in particular wherein the composite thermal insulation system (8) has a thickness of 4 to 12 cm, in particular 5 to 10, preferably 5.5 to 9 cm, preferably 6 to 8 cm, and/or
in particular wherein the composite thermal insulation system (8) has a thermal conductivity in the range from 0.015 to 0.045 W/(mK), in particular 0.017 to 0.040 W/(mK), preferably 0.020 to 0.035 W/(mK), preferably 0.022 to 0.027 W/(mK).

11. The composite thermal insulation system (8) according to claim 10, **characterised by** the following layer structure:
a thermal insulation board (9),
an insulation plaster layer (1),
a carrier layer (7),
a further insulation plaster layer (6),
a primer layer (5) and
a surface coating (4).

12. The insulation plaster board, consisting of an insulation plaster according to any one of claims 5 or 6 or an insulation plaster system according to claims 7 to 9.

## Revendications

1. Mélange sec de matériau de construction pour préparer un enduit d'isolation, **caractérisé en ce que**
le mélange sec de matériau de construction
(A) contient un aérogel dans des quantités allant de 5 à 35 % en poids, rapporté au mélange sec de matériau de construction,
(B) au moins un agrégat léger, en particulier de la perlite, dans des quantités allant de 40 à 75 % en poids, rapporté au mélange sec de matériau de construction,
(C) au moins un liant à base de chaux, en particulier de chaux hydraulique, dans des quantités allant de 8 à 40 % en poids, rapporté au mélange sec de matériau de construction,
(D) au moins un liant à base de ciment, en particulier de ciment blanc, dans des quantités allant de 1,5 à 10 % en poids, rapporté au mélange sec de matériau de construction et
(E) au moins un additif dans des quantités allant de 0,1 à 5 % en poids, rapporté au mélange sec de matériau de construction,
le mélange sec de matériau de construction contenant l'aérogel et l'agrégat léger selon un rapport pondéral aérogel/agrégat léger de 1/1 à 1/13 et
**en ce que** le mélange sec de matériau de construction contient le liant à base de chaux et le liant à base de ciment selon un rapport pondéral liant à base de chaux/liant à base de ciment de 1/1 à 15/1.

2. Mélange sec de matériau de construction selon la revendication 1, caractérisé en ce
le mélange sec de matériau de construction contient de l'aérogel dans des quantités allant de 10 à 30 % en poids, de manière particulièrement préférée de 15 à 25 % en poids, rapporté au mélange sec de matériau de construction et/ou
en ce que l'aérogel présente une taille de particules de 0,01 à 10 mm, en particulier de 0,05 à 8 mm, de préférence de 0,1 à 7 mm, de préférence de 0,2 à 6 mm, de manière particulièrement préférée de 0,5 à 5 mm, de manière particulièrement préférée de 0,5 à 4 mm, de manière préférée entre toutes de 0,5 à 2 mm.

3. Mélange sec de matériau de construction selon la revendication 1 ou 2, **caractérisé en ce que** le mélange sec de matériau de construction contient en outre au moins un agrégat, choisi en particulier parmi les roches naturelles ou artificielles, les métaux ou les verres, l'agrégat étant en particulier un agrégat léger ayant notamment une densité brute de grain maximale de 2,0 kg/dm³, choisi en particulier dans le groupe des roches volcaniques, de la perlite, de la vermiculite, de la pierre ponce, du verre cellulaire et du verre expansé, de l'argile expansée, de l'ardoise expansée, du polystyrène expansé, du tuf, du mica expansé, du gravier volcanique, du sable volcanique, des plastiques cellulaires et des mélanges de ceux-ci, et de préférence la perlite.

4. Utilisation d'un mélange sec de matériau de construction, en particulier d'un enduit au mortier, selon l'une des revendications précédentes, pour préparer un enduit d'isolation, en particulier un enduit d'isolation thermique, afin d'isoler thermiquement des constructions, en particulier des bâtiments.

5. Enduit d'isolation, en particulier enduit d'isolation thermique, pour isoler thermiquement des constructions, pouvant être obtenu à partir d'un mélange sec de matériau de construction selon l'une des revendications 1 à 3, l'enduit d'isolation pouvant être obtenu en mélangeant le mélange sec de matériau de construction avec de l'eau dans des quantités allant de 70 à 150 % en poids, rapporté au mélange sec de matériau de construction, et l'enduit d'isolation durci présentant une résistance à la compression de 0,4 à 2,5 N/mm².

6. Enduit d'isolation selon la revendication 5,
**caractérisé en ce que**
l'enduit d'isolation durci présente une conductivité thermique dans la plage de 0,02 à 0,055 W/(mK), en particulier de 0,022 à 0,050 W/(mK), de préférence de 0,024 à 0,045 W/(mK), de préférence de 0,026 à 0,040 W/(mK), de manière particulièrement préférée de 0,028 à 0,032 W/(mK) et/ou
**en ce que** l'enduit d'isolation durci présente un indice de perméabilité à la vapeur d'eau µ, déterminé selon DIN EN ISO 12542, dans la plage de 2 à 9, en particulier de 3 à 7, de préférence de 4 à 6.

7. Système d'enduit d'isolation multicouche (3), présentant au moins une couche d'enduit d'isolation (1), constituée d'un enduit d'isolation selon la revendication 5 ou 6 et d'un revêtement de surface (4), le revêtement étant agencé au moins sur une surface (2) munie du système d'enduit d'isolation (3), en particulier un côté de la couche d'enduit d'isolation (1) éloigné d'une paroi de bâtiment, et recouvre de préférence au moins sensiblement ladite couche.

8. Système d'enduit d'isolation (3) selon la revendication 7, **caractérisé par** la structure stratifiée suivante, formée à partir d'une surface (2) munie du système d'enduit d'isolation (3), à savoir :
une couche d'enduit d'isolation (1),
une couche support (7),
une autre couche d'enduit d'isolation (6),
une couche d'apprêt (5) et
un revêtement de surface (4).

9. Système d'enduit d'isolation (3) selon la revendication 7 ou 8, **caractérisé en ce que** le système d'enduit d'isolation (3) présente une épaisseur de couche de 1,5 à 14 cm, en particulier de 1,5 à 10 cm, de préférence de 2,5 à 9 cm, de préférence de 3,5 à 8 cm.

10. Système composite d'isolation thermique (8), présentant un panneau d'isolation thermique (9) et un système d'enduit d'isolation (3) selon l'une des revendications 7 à 9, en particulier
le panneau d'isolation thermique (9) étant d'abord agencé sur une surface (2) à isoler et ensuite le système d'enduit d'isolation (3),
en particulier le système composite d'isolation thermique (8) présentant une épaisseur de 4 à 12 cm, notamment de 5 à 10 cm, de préférence de 5,5 à 9 cm, de préférence de 6 à 8 cm et/ou
en particulier, le système composite d'isolation thermique (8) présentant une conductivité thermique dans la plage de 0,015 à 0,045 W/(mK), en particulier de 0,017 à 0,040 W/(mK), de préférence de 0,020 à 0,035 W/(mK), de manière particulièrement préférée de 0,022 à 0,027 W/(mK).

11. Système composite d'isolation thermique (8) selon la revendication 10, **caractérisé par** la structure stratifiée suivante, à savoir :
un panneau d'isolation thermique (9),
une couche d'enduit d'isolation (1),
une couche support (7),
une autre couche d'enduit d'isolation (6),
une couche d'apprêt (5) et
un revêtement de surface (4).

12. Panneau d'enduit d'isolation, constitué d'un enduit d'isolation selon l'une des revendications 5 ou 6 ou d'un système d'enduit d'isolation selon les revendications 7 à 9.
